# EUROPEAN PATENT APPLICATION

(11) **EP 4 185 011 A1**
(43) Date of publication of application: **24.05.2023**
(21) Application number: 21855593.6
(22) Date of filing: 12.08.2021
(51) Int. Cl.: H04W 36/00

(54) **RELAY COMMUNICATION METHOD, AND COMMUNICATION APPARATUS**

(30) Priority: 12.08.2020 CN 202010809409
(71) Applicant: Huawei Technologies Co., Ltd., Shenzhen, Guangdong 518129 (CN)
(72) Inventor: XING, Weijun, Shenzhen, Guangdong 518129 (CN); WU, Wenfu, Shenzhen, Guangdong 518129 (CN)
(74) Representative: Grünecker Patent- und Rechtsanwälte PartG mbB
(86) International application number: PCT/CN2021/112205
(87) International publication number: WO 2022/033543

(57) **Abstract**

Embodiments of this application provide a relay communication method and a communication apparatus, and relate to the communications field. A network side may modify, based on a relay service of UE, an AMBR used by the UE, to satisfy an actual service requirement of the UE. The method includes: An access network device obtains an aggregate maximum bit rate AMBR of a first session and a user equipment UE granularity-based AMBR used when a first terminal device provides a relay service, where the first session is for transmitting data of a second terminal device, and the first terminal device is a relay device of the second terminal device; and the access network device modifies the AMBR of the first session based on the UE granularity-based AMBR.

## Description

This application claims priority to Chinese Patent Application No. 202010809409.3, filed with the China National Intellectual Property Administration on August 12, 2020 and entitled "RELAY COMMUNICATION METHOD AND COMMUNICATION APPARATUS", which is incorporated herein by reference in its entirety.

### TECHNICAL FIELD

Embodiments of this application relate to the communication field, and in particular, to a relay communication method and a communication apparatus.

### BACKGROUND

In a communication network, a terminal device (referred to as a relay terminal device) that establishes a connection to a cellular network may provide wider network coverage for the cellular network through a PC5 interface between the terminal device and another terminal device. An aggregate maximum bit rate (aggregate maximum bit rate, AMBR) used by a terminal device when the terminal device serves as common user equipment (user equipment, UE) is different from an AMBR used by the UE when the UE serves as a relay device. For example, the AMBR used when the UE serves as a relay device is greater than the AMBR used when the UE serves as common UE.

However, in a conventional technology, during allocation of an AMBR for UE, a "role" played by the UE when the UE accesses a network is not considered. As a result, the AMBR allocated to the UE may not satisfy an actual service requirement of the UE. For example, the AMBR allocated to the UE is excessively small. Therefore, the AMBR can support only a service of the UE, but cannot support a relay service of the UE.

### SUMMARY

Embodiments of this application provide a relay communication method and a communication apparatus. A network side may modify, based on a relay service of UE, an AMBR used by the UE, to satisfy an actual service requirement of the UE.

According to a first aspect, a relay communication method is provided, including: An access network device may obtain an AMBR of a first session and a UE granularity-based AMBR used when a first terminal device provides a relay service, where the first session is for transmitting data of a second terminal device, and the first terminal device is a relay device of the second terminal device; and the access network device may further modify the AMBR of the first session based on the UE granularity-based AMBR used when the first terminal device provides the relay service.

In this application, a UE-AMBR used when a relay service is provided and a session-AMBR are configured for UE, so that a network side may determine, based on a "role" played by the UE, UE-AMBRs corresponding to different roles, to modify an AMBR of a PDU session to facilitate proper bandwidth control on the UE. When relay UE (for example, the first terminal device) establishes a PDU session for a relay service, or relay UE forwards a PDU session of remote UE (for example, the second terminal device) to provide a relay service, the access network device may modify an AMBR of the PDU session (for example, the first session) based on a UE-AMBR used when the relay UE provides the relay service. In this way, a sum of AMBRs of all current PDU sessions of the relay UE cannot exceed the UE-AMBR used when the relay UE provides the relay service, and both a service of the UE and the relay service of the UE are supported.

With reference to the first aspect, in a first possible implementation of the first aspect, that the access network device obtains the AMBR of the first session includes: If the first session is a session of the first terminal device, the access network device receives, by using an access and mobility management network element of the first terminal device, the AMBR of the first session sent by a session management network element of the first terminal device; or if the first session is a session of the second terminal device, the access network device receives, by using an access and mobility management network element of the second terminal device, the AMBR of the first session sent by a session management network element of the second terminal device.

This application is applicable to a layer 2 relay scenario and a layer 3 relay scenario. In the layer 3 relay scenario, a session management network element of a relay device (for example, the first terminal device) establishes or updates a PDU session (for example, the first session) for the relay device to provide a relay service, and the access network device may obtain an AMBR of the session from the session management network element of the relay device. In the layer 2 relay scenario, a session management network element of a remote device (for example, the second terminal device) establishes or updates a PDU session (for example, the first session), a relay device may forward the session to provide a relay service for the relay device, and the access network device may obtain an AMBR of the session from the session management network element of the remote device.

With reference to the first aspect or the first possible implementation of the first aspect, in a second possible implementation of the first aspect, that the access network device obtains the UE granularity-based AMBR used when the first terminal device provides the relay service includes: The access network device receives the UE granularity-based AMBR sent by the access and mobility management network element of the first terminal device.

In this application, a UDM/UDR may preconfigure the UE-AMBR used when the UE serves as the relay device. When the UE provides the relay service, an access and mobility management network element of the UE may obtain, from the UDM/UDR, the UE-AMBR used when the UE serves as a relay device, and send the UE-AMBR used when the UE serves as a relay device to the access network device, so that the access network device modifies an AMBR of a session based on the UE-AMBR used when the UE serves as a relay device, to make a sum of AMBRs of all sessions when the UE serves as a relay device not exceed the UE-AMBR used when the UE serves as a relay device.

With reference to the first aspect or the first or the second possible implementation of the first aspect, in a third possible implementation of the first aspect, that the access network device modifies the AMBR of the first session based on the UE granularity-based AMBR includes: If the AMBR of the first session is greater than an available AMBR of the first terminal device, the access network device sends first information to the session management network element of the first terminal device by using the access and mobility management network element of the first terminal device, where the available AMBR is a difference between the UE granularity-based AMBR used when the first terminal device provides the relay service and an AMBR that has been occupied by the session, and the first information requests the session management network element of the first terminal device to modify the AMBR of the first session; and the access network device receives a modified AMBR of the first session from the session management network element of the first terminal device. The AMBR that has been occupied by the session may be a sum of AMBRs of current sessions used by the first terminal device to provide a relay service.

This application supports the layer 3 relay scenario. When an AMBR of a session for providing a relay service is greater than a currently available AMBR of the relay device (a remaining AMBR of a UE-AMBR used when the relay service is provided), the session management network element of the relay device is indicated to modify the AMBR of the session, to ensure that the AMBR of the session does not exceed the currently available AMBR of the relay device.

With reference to the first aspect or the first or the second possible implementation of the first aspect, in a fourth possible implementation of the first aspect, that the access network device modifies the AMBR of the first session based on the UE granularity-based AMBR includes:
if the AMBR of the first session is greater than an available AMBR of the first terminal device, the access network device sends second information to the session management network element of the second terminal device by using the access and mobility management network element of the second terminal device, where the available AMBR is a difference between the UE granularity-based AMBR and an AMBR that has been occupied by the session, and the second information requests the session management network element of the second terminal device to modify the AMBR of the first session; and the access network device receives a modified AMBR of the first session from the session management network element of the second terminal device.

This application supports the layer 2 relay scenario. When an AMBR of a session for providing a relay service is greater than a currently available AMBR of the relay device (a remaining AMBR of a UE-AMBR used when the relay service is provided), the session management network element of the remote device is indicated to modify the AMBR of the session, to ensure that the AMBR of the session does not exceed the currently available AMBR of the relay device.

With reference to the third or the fourth possible implementation of the first aspect, in a fifth possible implementation of the first aspect, the method further includes: The access network device performs bandwidth control on the first session based on the modified AMBR of the first session.

With reference to the first aspect or the first to the fifth possible implementations of the first aspect, in a sixth possible implementation of the first aspect, the method further includes: The access network device updates an available AMBR of the first terminal device based on the modified AMBR of the first session.

With reference to the first aspect or the first to the sixth possible implementations of the first aspect, in a seventh possible implementation of the first aspect, the access network device may further send the available AMBR of the first terminal device to the first terminal device.

In this application, the available AMBR sent by the access network device may be a latest available AMBR of the first terminal device, namely, a remaining AMBR of a UE-AMBR (the UE granularity-based AMBR used when the relay service is provided) after the first terminal device accesses the first session. The AMBR of the first session may be a modified AMBR, or may be an initially allocated AMBR.

The access network device sends the latest available AMBR to the relay device, so that the relay device notifies the remote device of the currently available AMBR of the relay device in relay discovery with the remote device, and the remote device may determine, based on the available AMBR, whether a service requirement of the remote device is satisfied.

According to a second aspect, a relay communication method is provided, including: An access and mobility management network element obtains a user equipment UE granularity-based aggregate maximum bit rate AMBR used when a first terminal device provides a relay service, and sends, to an access network device of the first terminal device, the UE granularity-based AMBR used when the first terminal device provides the relay service.

In this application, a UE-AMBR used when UE serves as a relay device (namely, a UE granularity-based AMBR used when a relay service is provided) may be preconfigured. When the UE provides the relay service, an access and mobility management network element of the UE may obtain the UE-AMBR used when the UE serves as a relay device, and send the UE-AMBR used when the UE serves as a relay device to the access network device of the UE, so that the access network device adjusts an AMBR of a session based on the UE-AMBR.

With reference to the second aspect, in a first possible implementation of the second aspect, the method further includes: The access and mobility management network element receives relay capability information from the first terminal device, where the relay capability information represents that the first terminal device supports a relay service.

In this application, in response to relay capability information sent by the UE, the access and mobility management network element may obtain the UE-AMBR used when the UE serves as a relay device.

With reference to the second aspect or the first possible implementation of the second aspect, in a second possible implementation of the second aspect, that the access and mobility management network element obtains the UE granularity-based AMBR used when the first terminal device provides the relay service includes: The access and mobility management network element obtains subscription information of the first terminal device from a subscriber data management network element or a unified data storage network element, where the subscription information of the first terminal device includes the UE granularity-based AMBR used when the first terminal device provides the relay service.

In this application, a UDM/UDR may preconfigure the UE-AMBR used when the UE serves as a relay device (namely, the UE granularity-based AMBR used when the relay service is provided), the access and mobility management network element of the UE may obtain, from the UDM/UDR, the UE-AMBR used when the UE serves as a relay device.

According to a third aspect, a communication apparatus is provided. The communication apparatus may be a network access device or a component in a network access device. The communication device includes a processing unit, configured to obtain an aggregate maximum bit rate AMBR of a first session and a user equipment UE granularity-based AMBR used when a first terminal device provides a relay service, where the first session is for transmitting data of a second terminal device, and the first terminal device is a relay device of the second terminal device; and
the processing unit is further configured to modify the AMBR of the first session based on the UE granularity-based AMBR.

In this application, a UE-AMBR used when a relay service is provided and a session-AMBR are configured for UE, so that a network side may modify an AMBR of a PDU session based on a "role" played by the UE, to facilitate proper bandwidth control on the UE. When relay UE (for example, the first terminal device) establishes a PDU session for a relay service, or relay UE forwards a PDU session of remote UE (for example, the second terminal device) to provide a relay service, an access network device may modify an AMBR of the PDU session (for example, the first session) based on a UE-AMBR used when the relay UE provides the relay service. In this way, a sum of AMBRs of all current PDU sessions of the relay UE cannot exceed the UE-AMBR used when the relay UE provides the relay service, and both a service of the UE and the relay service of the UE are supported.

With reference to the third aspect, in a first possible implementation of the third aspect, if the first session is a session of the first terminal device, the processing unit receives, by using an access and mobility management network element of the first terminal device, the AMBR of the first session sent by a session management network element of the first terminal device; or if the first session is a session of the second terminal device, the processing unit receives, by using an access and mobility management network element of the second terminal device, the AMBR of the first session sent by a session management network element of the second terminal device.

With reference to the third aspect or the first possible implementation of the third aspect, in a second possible implementation of the third aspect, the communication apparatus further includes a communication unit, and the communication unit is configured to receive the UE granularity-based AMBR sent by the access and mobility management network element of the first terminal device.

With reference to the third aspect or the first or the second possible implementation of the third aspect, in a third possible implementation of the third aspect, the communication apparatus includes a communication unit, and the communication unit is configured to: if the processing unit determines that the AMBR of the first session is greater than an available AMBR of the first terminal device, send first information to the session management network element of the first terminal device by using the access and mobility management network element of the first terminal device, where the available AMBR is a difference between the UE granularity-based AMBR and an AMBR that has been occupied by the session, and the first information requests the session management network element of the first terminal device to modify the AMBR of the first session; and receive a modified AMBR of the first session from the session management network element of the first terminal device.

With reference to the third aspect or the first or the second possible implementation of the third aspect, in a fourth possible implementation of the third aspect, the communication apparatus includes a communication unit, and the communication unit is configured to: if the processing unit determines that the AMBR of the first session is greater than an available AMBR of the first terminal device, send second information to the session management network element of the second terminal device by using the access and mobility management network element of the second terminal device, where the available AMBR is a difference between the UE granularity-based AMBR and an AMBR that has been occupied by the session, and the second information requests the session management network element of the second terminal device to modify the AMBR of the first session; and receive a modified AMBR of the first session from the session management network element of the second terminal device.

With reference to the third or the fourth possible implementation of the third aspect, in a fifth possible implementation of the third aspect, the processing unit is further configured to perform bandwidth control on the first session based on the modified AMBR of the first session.

With reference to the fifth possible implementation of the third aspect, in a sixth possible implementation of the third aspect, the processing unit is configured to update an available AMBR of the first terminal device based on the modified AMBR of the first session; and
the communication unit is configured to send an updated available AMBR of the first terminal device to the first terminal device.

According to a fourth aspect, a communication apparatus is provided. The communication apparatus may be an access and mobility management network element or a component in an access and mobility management network element. The communication apparatus includes: a processing unit, configured to obtain a user equipment UE granularity-based aggregate maximum bit rate AMBR used when a first terminal device provides a relay service; and a communication unit, configured to send, to an access network device of the first terminal device, the UE granularity-based AMBR used when the first terminal device provides the relay service.

In this application, a UE-AMBR used when UE serves as a relay device (namely, a UE granularity-based AMBR used when a relay service is provided) may be preconfigured. When the UE provides the relay service, an access and mobility management network element of the UE may obtain the UE-AMBR used when the UE serves as a relay device, and send the UE-AMBR used when the UE serves as a relay device to the access network device of the UE, so that the access network device adjusts an AMBR of a session based on the UE-AMBR.

With reference to the fourth aspect, in a second possible implementation of the fourth aspect, the communication unit is further configured to receive relay capability information from the first terminal device, where the relay capability information represents that the first terminal device supports a relay service.

With reference to the fourth aspect or the first possible implementation of the fourth aspect, in a second possible implementation of the fourth aspect, the processing unit is specifically configured to obtain subscription information of the first terminal device from a subscriber data network element or a unified data storage network element, where the subscription information of the first terminal device includes the UE granularity-based AMBR used when the first terminal device provides the relay service.

According to a fifth aspect, a communication apparatus is provided, including at least one processor and a memory. The at least one processor is coupled to the memory; the memory is configured to store a computer program; and
the at least one processor is configured to execute the computer program stored in the memory, so that the apparatus performs the method according to any one of the first aspect and the implementations of the first aspect.

According to a sixth aspect, a communication apparatus is provided, including at least one processor and a memory. The at least one processor is coupled to the memory; the memory is configured to store a computer program; and
the at least one processor is configured to execute the computer program stored in the memory, so that the apparatus performs the method according to any one of the second aspect and the implementations of the second aspect.

According to a seventh aspect, a computer-readable storage medium is provided. The computer-readable storage medium stores instructions. When the computer-readable storage medium is run on the communication apparatus according to any one of the third aspect and the implementations of the third aspect, the communication apparatus is enabled to perform the communication method according to any one of the first aspect and the implementations of the first aspect.

According to an eighth aspect, a computer storage medium is provided. The computer-readable storage medium stores instructions. When the computer-readable storage medium is run on the communication apparatus according to any one of the fourth aspect and the implementations of the fourth aspect, the communication apparatus is enabled to perform the communication method according to any one of the second aspect and the implementations of the second aspect.

According to a ninth aspect, a wireless communication apparatus is provided. The communication apparatus includes a processor, for example, applied to the communication apparatus, and configured to implement the method according to any one of the first aspect and the implementations of the first aspect. The communication apparatus may be, for example, a chip system. In a feasible implementation, the chip system further includes a memory, and the memory is configured to store program instructions and data that are necessary to implement a function of the method in the first aspect.

According to a tenth aspect, a wireless communication apparatus is provided. The communication apparatus includes a processor, for example, applied to the communication apparatus, and configured to implement a function or the method in any one of the second aspect and the implementations of the second aspect. The communication apparatus may be, for example, a chip system. In a feasible implementation, the chip system further includes a memory, and the memory is configured to store program instructions and data that are necessary to implement a function of the method in the second aspect.

The chip system in the foregoing aspect may be a system on chip (system on chip, SOC), or may be a baseband chip or the like. The baseband chip may include a processor, a channel coder, a digital signal processor, a modem, an interface module, and the like.

According to an eleventh aspect, a communication system is provided. The communication system includes a first terminal device, a second terminal device, and the communication apparatus according to any one of the third aspect, the possible implementations of the third aspect, the fourth aspect, and the possible implementations of the fourth aspect.

In a possible implementation, the communication system further includes a session management network element.

### BRIEF DESCRIPTION OF DRAWINGS

FIG. 1 is an architectural diagram of a communication system according to an embodiment of this application;
FIG. 2 is a schematic diagram of a protocol stack according to an embodiment of this application;
FIG. 3 is a schematic diagram of relay according to an embodiment of this application;
FIG. 4 is a schematic diagram of a protocol layer for layer 2 relay according to an embodiment of this application;
FIG. 5 is a schematic diagram of a session for layer 2 relay according to an embodiment of this application;
FIG. 6 is a schematic diagram of a protocol layer for layer 3 relay according to an embodiment of this application;
FIG. 7 is a schematic diagram of a session for layer 3 relay according to an embodiment of this application;
FIG. 8a is a block diagram of a structure of a communication apparatus according to an embodiment of this application;
FIG. 8b is a block diagram of another structure of a communication apparatus according to an embodiment of this application;
FIG. 9 is a schematic flowchart of a relay communication method according to an embodiment of this application;
FIG. 10A and FIG. 10B are another schematic flowchart of a relay communication method according to an embodiment of this application;
FIG. 11 is another schematic flowchart of a communication method according to an embodiment of this application; and
FIG. 12 to FIG. 15 are block diagrams of other structures of a communication apparatus according to an embodiment of this application.

### DESCRIPTION OF EMBODIMENTS

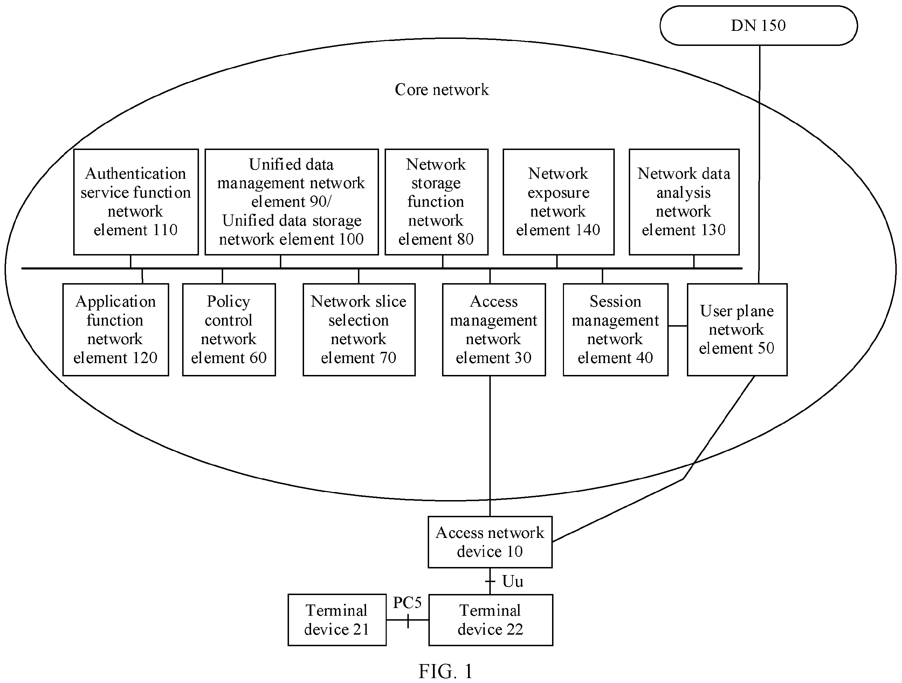

FIG. 1 is a schematic diagram of a network architecture of a communication system applicable to an embodiment of this application. The network architecture includes an access network device 10, a terminal device (only a terminal device 21 and a terminal device 22 are shown in the figure), an access management network element 30, a session management network element 40, a user plane network element 50, a policy control network element 60, a network slice selection network element 70, a network storage function network element 80, a unified data management network element 90, a unified data storage network element 100, an authentication service function network element 110, an application function network element 120, a network data analysis network element 130, a network exposure network element 140, and a data network (data network, DN) 150 that is connected to an operator network. The terminal device may send service data to the data network by using the access network device and the user plane network element, and receive service data from the data network.

The terminal device is a device with a wireless sending/receiving function, may be deployed on land, and includes an indoor or outdoor device, a handheld device, a wearable device, or an in-vehicle device, or may be deployed on water (for example, on a steamship), or deployed in the air (for example, on an airplane, a balloon, or a satellite). The terminal device may communicate with a core network through a radio access network (radio access network, RAN), and exchange a voice and/or data with the RAN. The terminal device may be a mobile phone (mobile phone), a tablet computer (Pad), a computer with a wireless sending/receiving function, a mobile Internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in a remote medical (remote medical) application, a wireless terminal in a smart grid (smart grid), a wireless terminal in transportation safety (transportation safety), a wireless terminal in a smart city (smart city), a wireless terminal device in a smart home (smart home), or the like. Application scenarios are not limited in this embodiment of this application. Sometimes, the terminal device may also be referred to as user equipment (user equipment, UE), a mobile station, a remote station, or the like. A specific technology, a device form, and a name used by the terminal device are not limited in embodiments of this application.

The access network device is a device that is in a network and that is configured to connect a terminal device to a wireless network. The access network device may be a node in a radio access network, or may be referred to as a base station, or may be referred to as a radio access network (radio access network, RAN) node (or device). The network device may include a long term evolution (long term evolution, LTE) system, or an evolved NodeB (NodeB, eNB, or e-NodeB, evolutional NodeB) in an LTE-advanced (LTE-Advanced, LTE-A) system, for example, a conventional macro base station eNB and a micro base station eNB in a heterogeneous network scenario, may include a next generation NodeB (next generation NodeB, gNB) in a fifth generation (5th generation, 5G) new radio (new radio, NR) system, may include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB, or home NodeB, HNB), a baseband unit (base band unit, BBU), a baseband pool BBU pool, a Wi-Fi access point (access point, AP), or the like, or may include a central unit (centralized unit, CU) and a distributed unit (distributed unit, DU) in a cloud radio access network (cloud radio access network, CloudRAN) system. This is not limited in embodiments of this application. In a separate deployment scenario in which the access network device includes a CU and a DU, the CU supports a radio resource control (radio resource control, RRC) , the packet data convergence protocol (packet data convergence protocol, PDCP), the service data adaptation protocol (service data adaptation protocol, SDAP), and another protocol, and the DU mainly supports the radio link control (radio link control, RLC), the media access control (media access control, MAC), and a physical layer protocol.

The access management network element (which may also be referred to as an access and mobility management network element in embodiments of this application) is mainly used for attachment, mobility management, and tracking area update procedures of a terminal in a mobile network. The access management network element terminates a non-access stratum (non-access stratum, NAS) message, completes registration management, connection management, and reachability management, tracking area list (track area list, TA list) allocation, mobility management, and the like, and transparently routes a session management (session management, SM) message to the session management network element. In a fifth generation (5th generation, 5G) communication system, the access management network element may be an access and mobility management function (access and mobility management function, AMF). In a future communication system (for example, a 6G communication system), the mobility management network element may still be an AMF network element, or may have another name. This is not limited in this application.

The session management network element is mainly used for session management in a mobile network, for example, session establishment, modification, and release. A specific function is, for example, allocating an Internet protocol (internet protocol, IP) address to a terminal or selecting a user plane network element that provides a packet forwarding function. In a 5G communication system, the session management network element may be a session management function (session management function, SMF). In a future communication system (for example, a 6G communication system), the session management network element may still be an SMF network element, or may have another name. This is not limited in this application.

The user plane network element is mainly configured to perform processing such as forwarding, charging, and lawful interception on a user packet. The user plane network element may also be referred to as a protocol data unit (protocol data unit, PDU) session anchor (PDU session anchor, PSA). In a 5G communication system, the user plane network element may be a user plane function (user plane function, UPF). In a future communication system (for example, a 6G communication system), the user plane network element may still be a UPF network element, or may have another name. This is not limited in this application.

The policy control network element includes a user subscription data management function, a policy control function, a charging policy control function, a quality of service (quality of service, QoS) control function, and the like. In a 5G communication system, the policy control network element may be a policy control function (policy control function, PCF). In a future communication system (for example, a 6G communication system), the policy control network element may still be a PCF network element, or may have another name. This is not limited in this application.

The network slice selection function network element is mainly configured to select a proper network slice for a service of a terminal device. In a 5G communication system, the network slice selection network element may be a network slice selection function (network slice selection function, NSSF) network element. In a future communication system (for example, a 6G communication system), the network slice selection network element may still be an NSSF network element, or may have another name. This is not limited in this application.

The network storage function network element is mainly configured to provide a function of registering and discovering a network element or a service provided by a network element. In a 5G communication system, the network storage function network element may be a network repository function (network repository function, NRF). In a future communication system (for example, a 6G communication system), the network storage function network element may still be an NRF network element, or may have another name. This is not limited in this application.

The network data analysis network element may collect data from each network function (network function, NF), for example, a policy control network element, a session management network element, a user plane network element, an access management network element, and an application function network element (by using a network exposure function network element), and perform analysis and prediction. In a 5G communication system, the network data analysis network element may be a network data analysis function (network data analytics function, NWDAF). In a future communication system (for example, a 6G communication system), the network data analysis network element may still be an NWDAF network element, or may have another name. This is not limited in this application.

The unified data management network element is mainly configured to manage subscription information of a terminal device. In a 5G communication system, the unified data management network element may be a unified data management (unified data management, UDM) network element. In a future communication system (for example, a 6G communication system), the unified data management network element may still be a UDM network element, or may have another name. This is not limited in this application.

The unified data storage network element is mainly configured to store structured data information, including subscription information, policy information, and network data or service data that is defined in a standard format. In a 5G communication system, the unified data storage network element may be a unified data repository (unified data repository, UDR). In a future communication system (for example, a 6G communication system), the unified data storage network element may still be a UDR network element, or may have another name. This is not limited in this application.

The authentication service function network element is mainly configured to perform security authentication on a terminal device. In a 5G communication system, the authentication service function network element may be an authentication server function (authentication server function, AUSF). In a future communication system (for example, a 6G communication system), the authentication service function network element may still be an AUSF network element, or may have another name. This is not limited in this application.

The network exposure network element may expose some network functions to an application in a controlled manner. In a 5G communication system, the network exposure network element may be a network exposure function (network exposure function, NEF). In a future communication system (for example, a 6G communication system), the network exposure network element may still be an NEF network element, or may have another name. This is not limited in this application.

The application function network element may provide service data of various applications for a control plane network element in a communication network of an operator, or obtain network data information and control information from a control plane network element in a communication network. In a 5G communication system, the application function network element may be an application function (application function, AF). In a future communication system (for example, a 6G communication system), the application function network element may still be an AF network element, or may have another name. This is not limited in this application.

The data network is mainly configured to provide a data transmission service for a terminal device. The data network may be a private network, for example, a local area network, may be a public data network (public data network, PDN), for example, the Internet (Internet), or may be dedicated networks jointly deployed by an operator, for example, a configured IP multimedia network subsystem (IP Multimedia core network subsystem, IMS) service.

It should be understood that, the foregoing network element or function may be a network element in a hardware device, or may be a software function running on dedicated hardware or a virtualization function instantiated on a platform (for example, a cloud platform). Optionally, the foregoing network element or function may be implemented by one device, or may be implemented by a plurality of devices together, or may be a functional module in a device. This is not specifically limited in embodiments of this application.

For ease of description, an example in which the access management network element is an AMF network element and the network slice selection function network element is an NSSF network element is used for description subsequently in this application. Further, the AMF network element is referred to as AMF for short, and the NSSF network element is referred to as NSSF for short. In other words, all AMFs described subsequently in this application may be replaced with an access management network element, and all NSSFs described subsequently may be replaced with a network slice selection function network element.

Although not shown in FIG. 1, core network devices of the terminal device 21 and the terminal device 22 may be different. For example, different AMFs respectively perform access and mobility management on the terminal device 21 and the terminal device 22, or different SMFs respectively perform session management on the terminal device 21 and the terminal device 22.

First, terms in embodiments of this application are explained and described.

### (1) Quality of service (quality of service, QoS) parameter

The QoS parameter may be used to modify network QoS to provide better service for network communication. For example, the QoS parameter may be modified to resolve problems such as network delay and congestion, thereby ensuring efficient network operation.

UE may establish PDU sessions for different services. QoS parameters required for different services are different. For example, a high bandwidth is required for a video service, while a reliable low delay needs to be ensured for voice communication. When the UE initiates a PDU session establishment request or a PDU session update request, an SMF may establish different QoS flows (QoS Flow) for different services based on service requirements of the UE, and may identify the QoS flows by using QFIs (QoS Flow Identifier). QoS requirements corresponding to one QoS flow are the same, and these requirements may be quantified by using QoS parameters. For example, the QoS parameters may be a delay, a bandwidth, and a packet loss rate. 5QIs (5G QoS Identifier) may also be used to identify these QoS parameters.

Based on service requirements, the QoS parameters may further include an aggregate maximum bit rate (aggregate maximum bit rate, AMBR). The AMBR includes a UE-AMBR and a session-AMBR. The UE-AMBR refers to a maximum reachable bandwidth of all PDU sessions corresponding to the UE, and the session-AMBR refers to a maximum reachable bandwidth of all non-guaranteed bit rate QoS flows (Non-guaranteed bit rate QoS Flow, Non-GBR QoS Flow) corresponding to a PDU session.

### (2) Protocol stack

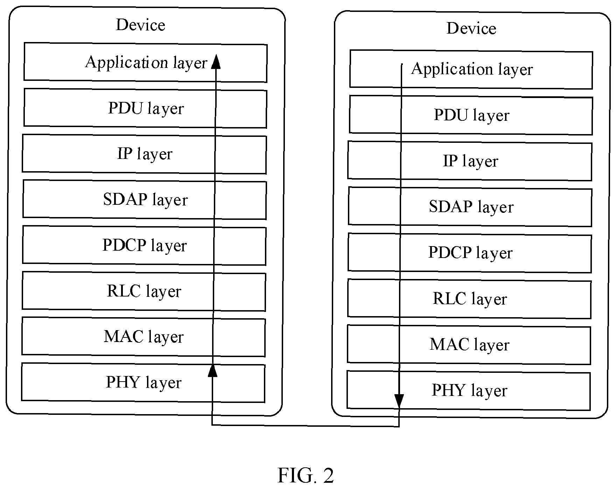

FIG. 2 is a schematic diagram of a protocol stack according to an embodiment of this application. Different devices may interact with each other by using a protocol layer shown in FIG. 2. Refer to FIG. 2. The protocol stack includes an application layer (application layer), a protocol data unit (protocol data unit, PDU) layer, an Internet protocol (internet protocol, IP) layer, a service data adaptation protocol (new radio-service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer.

### (3) Relay (relay)

In embodiments of this application, relay may be understood as that one terminal device accesses a network by using another terminal device and establishes an indirect connection (indirect connection) to the network. A terminal device that provides a relay service may be referred to as relay UE (relay UE), and a terminal device that accesses the network through relay may be referred to as remote UE (remote UE).

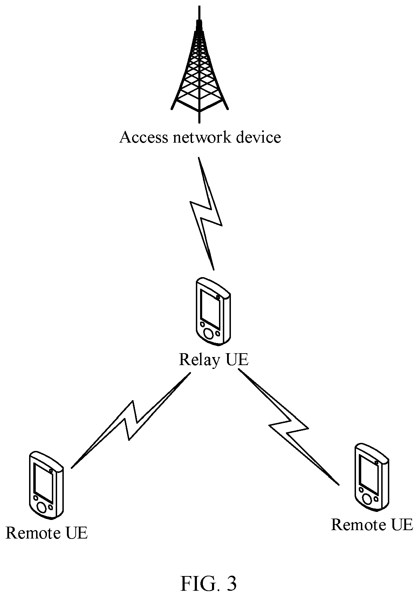

FIG. 3 is an architecture diagram of relay according to an embodiment of this application. Refer to FIG. 3. A remote device (remote UE) may communicate with an access network device by using a relay device (relay UE), to establish an indirect connection to a core network. In the network architecture shown in FIG. 1, the terminal device 21 may serve as relay UE, and the terminal device 22 may serve as remote UE. Specifically, the terminal device 21 communicates with the access network device 10 through a uu link, and the terminal device 21 communicates with the terminal device 22 through a direct link. The terminal device 21 may further provide a relay service for the terminal device 22. For example, the terminal device 21 receives, through a PC5 interface, data sent by the terminal device 22, and forwards the data from the terminal device 22 to the access network device 10. Alternatively, the terminal device 21 receives, through the uu link, data sent by the access network device to the terminal device 22, and may further forward received data to the terminal device 22 through the PC5 interface.

### (4) Layer 2 relay (L2 relay)

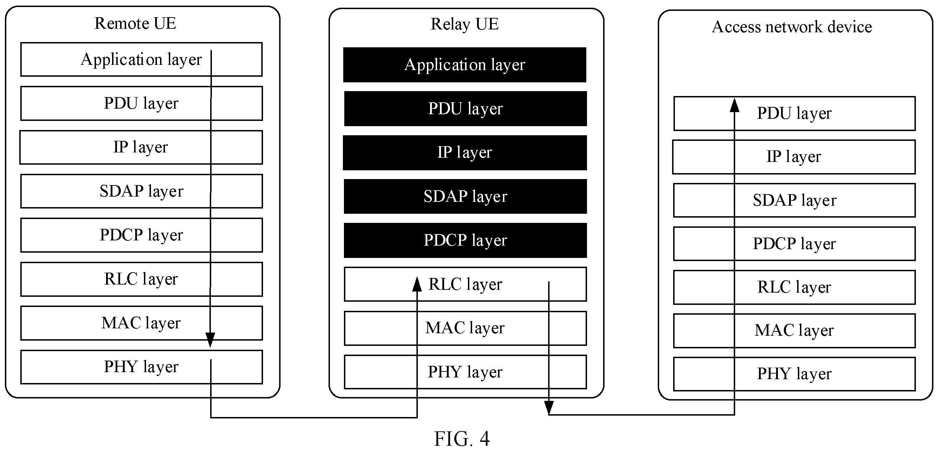

FIG. 4 is a schematic diagram of a protocol stack for layer 2 relay. Refer to FIG. 4. In a layer 2 relay scenario, when forwarding a data packet for remote UE, relay UE processes the data packet only below a PDCP layer (the data packet is not processed at the PDCP layer), and then forwards the data packet to an access network device for processing. This can ensure data security between the remote UE and the access network device, to avoid excessive exposure of data of the remote UE to the relay UE.

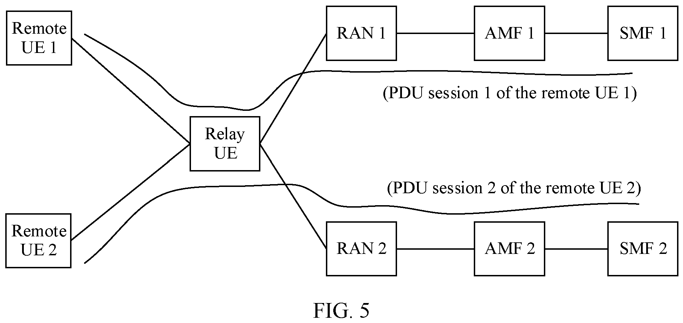

FIG. 5 is a schematic diagram of a connection for layer 2 relay. Refer to FIG. 5. One relay UE may be connected to a plurality of remote UEs, and provide layer 2 relay for the remote UEs for forwarding. Remote UE 1 establishes a PDU session 1 by using relay UE, and the relay UE may provide a relay service for the remote UE 1 by using the PDU session 1 of the remote UE 1, and may forward service data of the PDU session 1 of the remote UE 1. Remote UE 2 establishes a PDU session 2 by using the relay UE, and the relay UE may provide a relay service for the remote UE 2 by using the PDU session 2 of the remote UE 2. It can be learned that, in a layer 2 relay scenario, an SMF of the remote UE performs session management on a session used for relay.

### (5) Layer 3 relay (L3 relay)

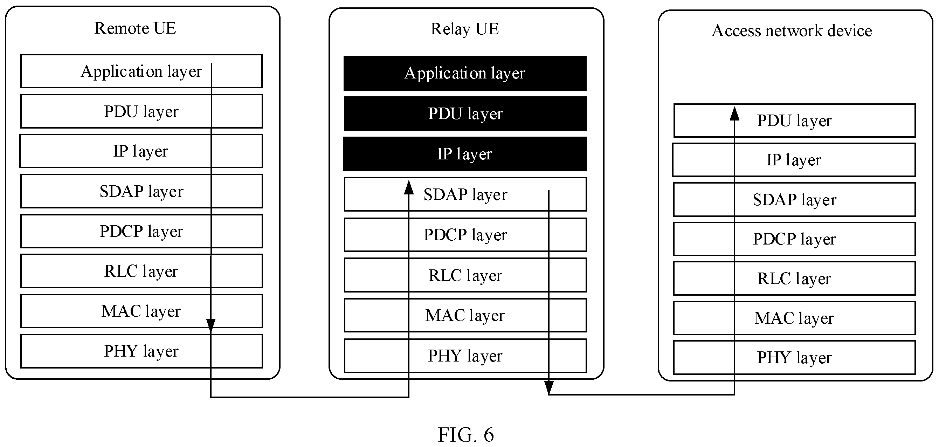

FIG. 6 is a schematic diagram of a protocol stack for layer 3 relay. Refer to FIG. 4. In a layer 3 relay scenario, when forwarding a data packet for the remote UE, the relay UE processes the data packet only below an IP layer (content of the data packet is not processed at the IP layer), and then forwards the data packet to the access network device for processing. The access network device does not perceive whether the relay UE forwards data of the remote UE.

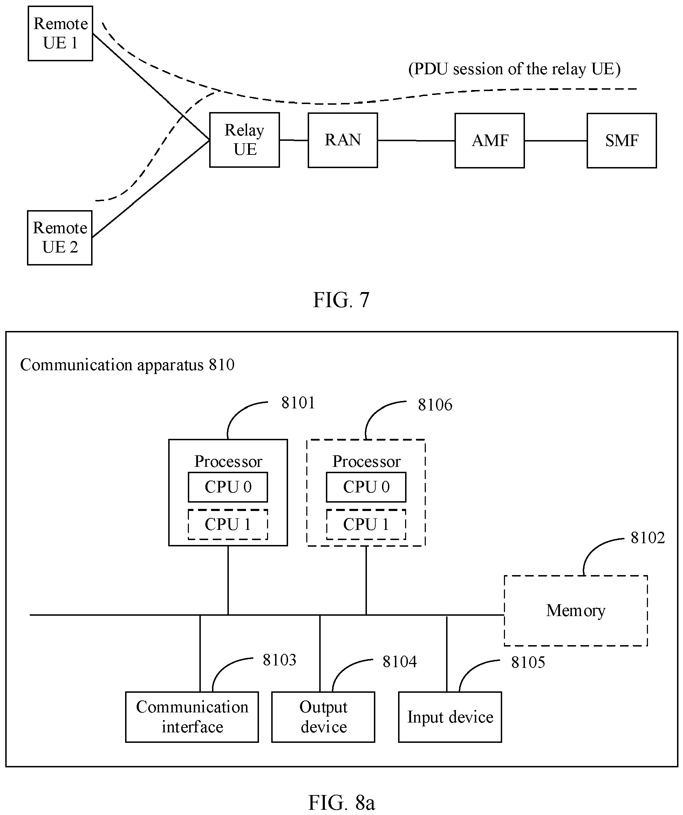

FIG. 7 is a schematic diagram of a connection for layer 3 relay. Refer to FIG. 7. One relay UE may be connected to a plurality of remote UEs, and provide layer 3 relay for the remote UEs for forwarding. Different from layer 2 relay, in the layer 3 relay scenario, the relay UE forwards data for the remote UE by using a PDU session of the relay UE. It can be learned that, in the layer 3 relay scenario, the SMF of the relay UE performs session management on a session used for relay.

In a conventional technology, during allocation of an AMBR for UE, a "role" played by the UE when the UE accesses a network is not considered. As a result, the AMBR allocated to the UE may not satisfy an actual service requirement of the UE. For example, the AMBR allocated to the UE is excessively small. Therefore, the AMBR can support only a service of the UE, but cannot support a relay service of the UE. In a layer 2 relay scenario or a layer 3 relay scenario, to support the relay service of the UE while ensuring a service of the UE, a UE granularity-based AMBR (UE-AMBR) used when the UE provides a relay service should be greater than a UE-AMBR used when the UE serves as common UE (that does not provide a relay service). When remote UE uses a PDU session of relay UE, a session-AMBR of the relay UE should also be higher than a session-AMBR used when the UE serves as common UE.

In addition, there may be another possibility that the UE-AMBR of the relay UE is only used for controlling a sum of AMBRs of PDU sessions of the relay UE. When the remote UE is connected to a network by using the relay UE, another UE-AMBR of the relay UE may be specifically used to limit an upper limit of a sum of AMBRs of PDU sessions of the remote UE.

Embodiments of this application provide a relay communication method. A UE-AMBR used when a relay service is provided and a session-AMBR are configured for UE, so that a network side may modify an AMBR of a PDU session based on a "role" played by the UE, to facilitate proper bandwidth control on the UE. When relay UE establishes a PDU session for a relay service, or relay UE forwards a PDU session of remote UE to provide a relay service, an access network device may modify an AMBR of the PDU session based on a UE-AMBR used when the relay UE provides the relay service. In this way, a sum of AMBRs of all current PDU sessions of the relay UE cannot exceed the UE-AMBR used when the relay UE provides the relay service, and both a service of the UE and the relay service of the UE are supported.

In addition, after the relay service is introduced, an operator may perform differentiated service control and charging based on the "role" played by the UE. For example, when the UE provides the relay service for another UE, the UE-AMBR used by the relay UE for the relay service may be separately controlled to limit an upper limit of a bandwidth that can be used by the UE to provide the relay service for the another UE, without affecting a bandwidth granted when the UE normally uses a service of the UE.

The terminal device in this embodiment of this application may be implemented by using a communication apparatus 810 in FIG. 8a. FIG. 8a is a schematic diagram of a hardware structure of the communication apparatus 810 according to an embodiment of this application. The communication apparatus 810 includes a processor 8101 and at least one communication interface (in FIG. 8a, only an example in which the communication apparatus 810 includes a communication interface 8103 is used for description). Optionally, the communication apparatus 810 further includes a memory 8102. The processor 8101, the memory 8102, and the communication interface 8103 are connected to each other.

The processor 8101 may be a general-purpose central processing unit (central processing unit, CPU), a microprocessor, an application-specific integrated circuit (application-specific integrated circuit, ASIC), or one or more integrated circuits configured to control program execution of the solution in this application.

The communication interface 8103 may be configured to communicate with another device or a communication network, for example, an Ethernet, a radio access network (radio access network, RAN), or a wireless local area network (wireless local area network, WLAN) by using any apparatus such as a transceiver.

The memory 8102 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently or may be connected to the processor. Alternatively, the memory may be integrated with the processor.

The memory 8102 is configured to store computer-executable instructions for performing the solutions in this application, and the processor 8101 controls execution of the computer-executable instructions. The processor 8101 is configured to execute the computer-executable instructions stored in the memory 8102, to implement an intent processing method provided in the following embodiments of this application.

Optionally, the computer-executable instructions in embodiments of this application may also be referred to as application program code. This is not specifically limited in embodiments of this application.

During specific implementation, in an embodiment, the processor 8101 may include one or more CPUs, for example, a CPU 0 and a CPU 1 in FIG. 8a.

In specific implementation, in an embodiment, the communication apparatus 810 may include a plurality of processors, for example, a processor 8101 and a processor 8106 in FIG. 8a. Each of the processors may be a single-core processor (single-CPU) or a multi-core processor (multi-CPU). Herein, the processor may be one or more devices, circuits, and/or processing cores configured to process data (for example, computer program instructions).

In specific implementation, in an embodiment, the communication apparatus 810 may further include an output device 8104 and an input device 8105. The output device 8104 communicates with the processor 8101, and may display information in a plurality of manners. For example, the output device 8104 may be a liquid crystal display (liquid crystal display, LCD), a light emitting diode (light emitting diode, LED) display device, a cathode ray tube (cathode ray tube, CRT) display device, a projector (projector), or the like. The input device 8105 communicates with the processor 8101, and may receive an input from a user in a plurality of manners. For example, the input device 8105 may be a mouse, a keyboard, a touchscreen device, a sensor device, or the like.

The communication apparatus 810 may be a general-purpose device or a special-purpose device. In specific implementation, the communication apparatus 810 may be a desktop computer, a portable computer, a network server, a palmtop computer (personal digital assistant, PDA), a mobile phone, a tablet computer, a wireless terminal apparatus, an embedded device, or a device of a structure similar to that shown in FIG. 8a. A type of the communication apparatus 810 is not limited in this embodiment of this application.

It should be noted that, the communication apparatus 810 may be a complete terminal, may be a component or an assembly that implements a function of a terminal, or may be a communication chip, for example, a baseband chip. When the communication apparatus 810 is a complete terminal, the communication interface may be a radio frequency module. When the communication apparatus 810 is a communication chip, the communication interface 8103 may be an input/output interface circuit of the chip, and the input/output interface circuit is configured to read and output a baseband signal.

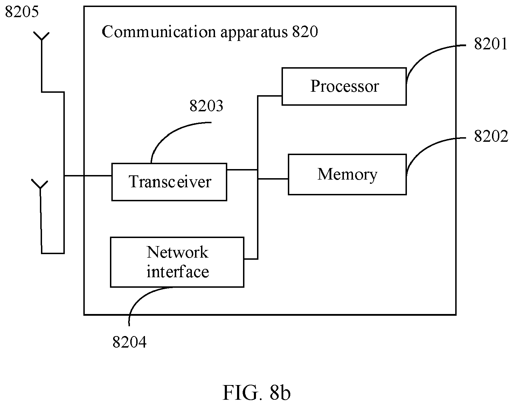

FIG. 8b is a schematic diagram of a structure of a communication apparatus. The communication apparatus 820 may be the access network device in embodiments of this application.

The communication apparatus includes at least one processor 8201, at least one transceiver 8203, at least one network interface 8204, and one or more antennas 8205. Optionally, the communication apparatus further includes at least one memory 8202. The processor 8201, the memory 8202, the transceiver 8203, and the network interface 8204 are connected to each other by using, for example, a bus. The antenna 8205 is connected to the transceiver 8203. The network interface 8204 is configured to connect the communication apparatus to another communication device through a communication link. For example, the communication apparatus is connected to a core network network element through an S1 interface. In this embodiment of this application, the connection may be implemented by using various types of interfaces, transmission lines, buses, and the like. This is not limited in this embodiment.

A processor in this embodiment of this application, for example, the processor 8201, may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logic operation. For example, the processor 8201 may be a single-core processor (single-CPU) or a multi-core processor (multi-CPU). The at least one processor 8201 may be integrated in one chip or located on a plurality of different chips.

A memory in this embodiment of this application, for example, the memory 8202, may include at least one of the following types: a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM). In some scenarios, the memory may alternatively be but is not limited to a compact disc read-only memory (compact disc read-only memory, CD-ROM) or another optical disk storage, an optical disc storage (including a compact disc, a laser disc, an optical disc, a digital versatile disc, a blue-ray optical disc, and the like), a magnetic disk storage medium or another magnetic storage device, or any other computer-accessible medium that can be used to carry or store expected program code in an instruction or data structure form.

The memory 8202 may exist independently, and is connected to the processor 8201. Optionally, the memory 8202 may be integrated with the processor 8201, for example, integrated into one chip. The memory 8202 can store program code for implementing technical solutions in embodiments of this application, and the processor 8201 controls execution of the program code. Various types of computer program code that are executed may also be considered as a driver of the processor 8201. For example, the processor 8201 is configured to execute the computer program code stored in the memory 8202, to implement the technical solutions in embodiments of this application.

The transceiver 8203 may be configured to support receiving or sending of a radio frequency signal between the communication apparatus and a terminal device, and the transceiver 8203 may be connected to the antenna 8205. Specifically, one or more antennas 8205 may receive a radio frequency signal, and the transceiver 8203 may be configured to: receive the radio frequency signal from the antenna, convert the radio frequency signal into a digital baseband signal or a digital intermediate frequency signal, and provide the digital baseband signal or the digital intermediate frequency signal to the processor 8201, so that the processor 8201 performs further processing, for example, demodulation processing and decoding processing, on the digital baseband signal or the digital intermediate frequency signal. In addition, the transceiver 8203 may be configured to: receive a modulated digital baseband signal or digital intermediate frequency signal from the processor 8201, convert the modulated digital baseband signal or digital intermediate frequency signal into a radio frequency signal, and send the radio frequency signal by using one or more antennas 8205. Specifically, the transceiver 8203 may selectively perform one or more levels of down-mixing processing and analog-to-digital conversion processing on the radio frequency signal to obtain a digital baseband signal or a digital intermediate frequency signal. A sequence between the down-mixing processing and the analog-to-digital conversion processing may be adjusted. The transceiver 8203 may selectively perform one or more levels of up-mixing processing and digital-to-analog conversion processing on the modulated digital baseband signal or digital intermediate frequency signal to obtain a radio frequency signal. A sequence between the up-mixing processing and the digital-to-analog conversion processing may be adjusted. The digital baseband signal and the digital intermediate frequency signal may be collectively referred to as digital signals. The transceiver may be referred to as a transceiver circuit, a transceiver unit, a transceiver component, a transmission circuit, a transmission unit, a transmission component, or the like.

It should be noted that, the communication apparatus 820 may be a complete communication apparatus, may be a component or an assembly that implements a function of the communication apparatus, or may be a communication chip. When the communication apparatus 820 is a communication chip, the transceiver 8203 may be an interface circuit of the chip, and the interface circuit is configured to read and output a baseband signal.

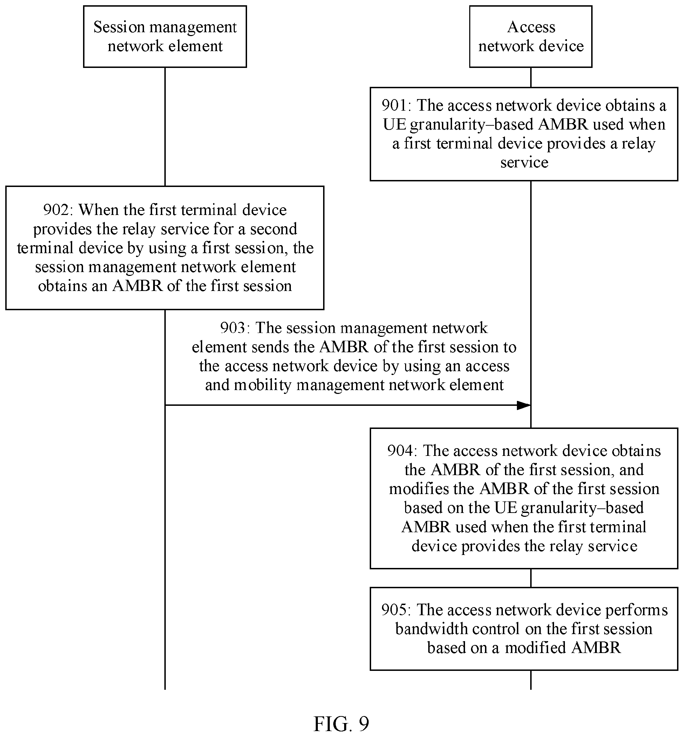

An embodiment of this application provides a relay communication method. As shown in FIG. 9, the method includes the following steps.

901: An access network device obtains a UE granularity-based AMBR used when a first terminal device provides a relay service.

The first terminal device may communicate with a network side by using the access network device, and the first terminal device may further provide a relay service for another terminal device. For example, the first terminal device is a relay device of a second terminal device. The second terminal device may send data to the access network device by using the first terminal device, and the second terminal device may receive, by using the first terminal device, data sent by the access network device.

The UE granularity-based AMBR used when the first terminal device provides the relay service may be a UE-AMBR used when the first terminal device serves as a relay (denoted as a relay UE-AMBR), and is an upper limit of an AMBR used when the first terminal device provides the relay service. When the first terminal device serves as a relay device, a sum of session-AMBRs of current sessions cannot exceed a UE-AMBR used when the first terminal device serves as a relay device (namely, the UE-AMBR used when the first terminal device provides the relay service). A current session may be a session used by the first terminal device to provide a relay service, or may be a session for another service of the first terminal device. The session used by the first terminal device to provide a relay service includes a session used by the first terminal device to provide a relay service for the second terminal device and a session used by the first terminal device to provide a relay service for another remote device (remote UE). The session used by the first terminal device to provide a relay service for the second terminal device may be a PDU session established by the first terminal device or may be a PDU session established by the second terminal device.

In specific implementation, the access network device may obtain, from an access and mobility management network element (for example, an AMF) of the first terminal device, the UE granularity-based AMBR used when the first terminal device provides the relay service. Different from a layer 2 relay scenario and a layer 3 relay scenario, the access network device may obtain the relay UE-AMBR of the first terminal device in the following two manners.

In a first manner, in the layer 3 relay scenario, the access network device may obtain the relay UE-AMBR of the first terminal device from the AMF of the first terminal device in a registration procedure, a service request procedure, a base station switching procedure, a session establishment process, or a session update process.

In a possible implementation, the first terminal device provides relay capability information of the first terminal device in the registration procedure, and the AMF of the first terminal device may obtain, from a UDM (or a UDR), the UE granularity-based AMBR used when the first terminal device provides the relay service. The UE granularity-based AMBR used when the first terminal device provides the relay service may be a UE granularity-based AMBR used when the first terminal device serves as a relay device.

Specifically, the first terminal device sends a registration request to the AMF. The registration request includes relay capability information of the terminal device, and the relay capability information represents that the first terminal device supports a relay service, that is, the first terminal device may serve as a relay to provide a relay service for another terminal. The relay capability information may be information about a communication capability of the first terminal device on a PC5 interface, and represents that the first terminal device may establish a direct connection to another terminal device to provide a relay service for the another terminal device.

In addition, after receiving the registration request from the first terminal device, the AMF of the first terminal device may obtain subscription information of the first terminal device from the UDM (or the UDR). The subscription information of the first terminal device includes the relay UE-AMBR of the first terminal device, namely, the UE granularity-based AMBR used when the first terminal device provides the relay service. Optionally, the subscription information of the first terminal device may further include a session granularity AMBR used when the first terminal device provides the relay service (denoted as a relay session-AMBR).

The AMF of the first terminal device may further send the subscription information of the first terminal device to the access network device by using an N2 message.

In another possible implementation, the first terminal device sends a session establishment request or a session update request to the AMF of the first terminal device, to request to establish a new PDU session for the relay service of the first terminal device or update a current PDU session of the first terminal device for the relay service of the first terminal device. After receiving the session establishment request or the session update request, the AMF of the first terminal device sends the session establishment request or the session update request to a session management network element (for example, an SMF) of the first terminal device. After receiving the session establishment request or the session update request, the session management network element of the first terminal device obtains the subscription information of the first terminal device from the UDM. The session management network element of the first terminal device may further send a session establishment response or a session update response to the AMF of the first terminal device. The session establishment response or the session update response includes the subscription information of the first terminal device. The AMF of the first terminal device may send the subscription information of the first terminal device to the access network device of the first terminal device by using the session establishment response or the session update response.

The subscription information of the first terminal device includes the relay UE-AMBR of the first terminal device, namely, the UE granularity-based AMBR used when the first terminal device provides the relay service. Optionally, the subscription information of the first terminal device may further include a session granularity AMBR used when the first terminal device provides the relay service (denoted as a relay session-AMBR).

In a second manner, in the layer 2 relay scenario, the access network device may obtain the relay UE-AMBR of the first terminal device from the AMF of the first terminal device in a registration procedure, a service request procedure, or a base station switching procedure; or the access network device obtains the relay UE-AMBR of the first terminal device in a configuration updating manner.

For example, in the registration procedure of the first terminal device, the AMF of the first terminal device may obtain subscription information of the first terminal device from the UDM, and send the subscription information of the first terminal device to the access network device by using an N2 message. The subscription information of the first terminal device includes the relay UE-AMBR of the first terminal device, namely, the UE granularity-based AMBR used when the first terminal device provides the relay service.

Alternatively, if the access network device determines that the first terminal device is to provide the relay service, and the access network device does not locally store subscription information that is of the first terminal device and that is related to the relay service, or a current UE-AMBR of the first terminal device cannot satisfy a requirement of the relay service, the access network device sends a configuration update request to the AMF of the first terminal device. The AMF of the first terminal device may obtain the subscription information of the first terminal device from the UDM. The first subscription information includes the relay UE-AMBR of the first terminal device. The AMF of the first terminal device may further send a configuration update response to the access network device. The configuration update response includes the subscription information of the first terminal device.

902: When the first terminal device provides the relay service for the second terminal device by using a first session, a session management network element obtains an AMBR of the first session.

The first session carries the relay service of the first terminal device, and the first terminal device may forward data from the second terminal device to the access network device by using the first session, or the first terminal device may forward data from the access network device to the second terminal device by using the first session. The first session is a session of the first terminal device.

Specifically, in the layer 3 relay scenario, the first terminal device may establish a new PDU session or update a current PDU session for the relay service. The first session is the new PDU session established by the first terminal device or a updated PDU session of the first terminal device.

In the layer 2 relay scenario, the second terminal device establishes a PDU session, and the first terminal device may use the PDU session of the second terminal device to provide a relay service for the second terminal device. The first session is the session of the second terminal device.

Different from layer 3 relay and layer 2 relay, the session management network element obtains the AMBR of the first session in the following two different implementations.

In a first manner, in the layer 3 relay scenario, the session management network element of the first terminal device obtains the relay session-AMBR of the first terminal device, and uses the relay session-AMBR as the AMBR of the first session.

In a possible implementation, the session management network element of the first terminal device obtains the relay session-AMBR of the first terminal device by obtaining the subscription information of the first terminal device.

Specifically, the session management network element of the first terminal device receives, by using the access and mobility management network element of the first terminal device, a session establishment request or a session update request sent by the first terminal device. The session establishment request requests the session management network element to establish the first session, and the session update request requests the session management network element to update the first session.

The session management network element obtains the subscription information of the first terminal device from a subscriber data management network element (for example, the UDM) in response to the session establishment request or the session update request. The subscription information includes the relay session-AMBR and the relay UE-AMBR of the first terminal device.

The session management network element may use the session granularity AMBR as the AMBR of the first session.

In another possible implementation, the session management network element of the first terminal device obtains the relay session-AMBR of the first terminal device by updating session association policy information, or obtains the relay session-AMBR of the first terminal device by updating a policy and charging control rule (policy and charging control rule, PCC).

Specifically, the session management network element of the first terminal device receives, by using the access and mobility management network element of the first terminal device, a session establishment request or a session update request sent by the first terminal device. The session establishment request requests the session management network element to establish the first session, and the session update request requests the session management network element to update the first session.

The session management network element sends a session management policy association request (SM policy association establishment) or a session management policy modification request (SM Policy Association Establishment or Modification) to a policy and charging control network element in response to the session establishment request or the session update request.

The session management network element receives session policy information from the policy and charging control network element. The session policy information includes the session granularity AMBR used when the first terminal device provides the relay service.

The session management network element may use the session granularity AMBR as the AMBR of the first session.

It should be noted that, the session update request or the session establishment request may carry an identifier of the first session. The UDM may determine, based on the identifier of the first session, the first session for the relay service; and the UDM may further determine a service type of the first terminal device based on the identifier of the first session, and determine a relay session-AMBR that is in the subscription information of the first terminal device and that matches the service type.

Alternatively, the session update request or the session establishment request carries a data network name (data network name, DNN). The UDM may determine, based on the DNN, the first session for the relay service; and the UDM may further determine a service type of the first terminal device based on the DNN, and determine a relay session-AMBR that is in the subscription information of the first terminal device and that matches the service type.

Optionally, the session establishment request or the session update request includes a relay service indication. The UDM may determine, based on an identifier of the first session, the first session for the relay service, and determine a relay session-AMBR that is in the subscription information of the first terminal device and that is used for the first session.

In a second manner, in the layer 2 relay scenario, a session management network element of the second terminal device obtains a session-AMBR of the second terminal device, and uses the session-AMBR of the second terminal device as the AMBR of the first session.

In a possible implementation, the session management network element of the second terminal device obtains the session-AMBR of the second terminal device by obtaining subscription information of the second terminal device.

The session management network element of the second terminal device receives, by using an access and mobility management network element of the second terminal device, a session establishment request or a session update request sent by the second terminal device. The session establishment request requests the session management network element to establish the first session, and the session update request requests the session management network element to update the first session.

The session management network element of the second terminal device obtains the subscription information of the second terminal device from a subscriber data management network element in response to the session establishment request or the session update request. The subscription information includes a session granularity AMBR of the second terminal device (namely, the session-AMBR of the second terminal device).

The session management network element of the second terminal device uses the session granularity AMBR as the AMBR of the first session.

In another possible implementation, the session management network element of the second terminal device obtains the relay session-AMBR of the first terminal device by updating a session association policy or a PCC rule.

Specifically, the session management network element of the second terminal device receives, by using an access and mobility management network element of the second terminal device, a session establishment request or a session update request sent by the second terminal device.

The session management network element of the second terminal device sends a session management policy association request or a session management policy modification request to a policy and charging control network element in response to the session establishment request or the session update request.

The session management network element of the second terminal device receives session policy information from the policy and charging control network element. The session policy information includes a session granularity AMBR of the second terminal device.

The session management network element of the second terminal device uses the session granularity AMBR as the AMBR of the first session.

It should be noted that, the session update request or the session establishment request may carry an identifier of the first session. The UDM may determine a service type of the second terminal device based on the identifier of the first session, and determine a session-AMBR that is in subscription information of the second terminal device and that matches the service type.

Alternatively, the session update request or the session establishment request carries a data network name (data network name, DNN). The UDM may determine a service type of the second terminal device based on the DNN, and determine a session-AMBR that is in subscription information of the second terminal device and that matches the service type.

903: The session management network element sends the AMBR of the first session to the access network device by using an access and mobility management network element.

In the layer 3 relay scenario, the session management network element of the first terminal device sends the AMBR of the first session to the access network device by using the access and mobility management network element of the first terminal device.

In the layer 2 relay scenario, the session management network element of the second terminal device sends the AMBR of the first session to the access network device by using the access and mobility management network element of the second terminal device.

904: The access network device obtains the AMBR of the first session, and modifies the AMBR of the first session based on the UE granularity-based AMBR used when the first terminal device provides the relay service.

Specifically, the access network device determines whether the UE-AMBR used when the first terminal device provides the relay service supports the current first session. If the UE-AMBR used when the first terminal device provides the relay service cannot support the current first session, the AMBR of the first session needs to be modified.

Different from the layer 3 relay and the layer 2 relay, the access network device may modify the AMBR of the first session in the following two different implementations.

In a first manner, in the layer 3 relay scenario, the access network device indicates the session management network element of the first terminal device to modify the AMBR of the first session.

For example, the access network device may record a sum of session-AMBRs of current sessions used when the first terminal device serves as a relay device, and may further modify an AMBR of a newly established current session with reference to the relay UE-AMBR and the sum of the session-AMBRs of the current sessions. If the access network device determines that the AMBR of the first session is greater than an available AMBR of the first terminal device, the access network device sends first information to the session management network element of the first terminal device by using the access and mobility management network element of the first terminal device, to request the session management network element of the first terminal device to modify the AMBR of the first session.

The available AMBR of the first terminal device is a difference between the UE granularity-based AMBR used when the first terminal device provides the relay service and an AMBR that has been occupied by the session. The AMBR that has been occupied by the session may be a sum of session-AMBRs of all current sessions that is recorded by the first terminal device.

For example, the relay UE-AMBR is 10 Mbps, a relay session-AMBR allocated by the UDM for the first session is 3 Mbps, and an AMBR occupied by all current sessions of the first terminal device except the first session is 8 Mbps. (10 Mbps-8 Mbps) < 3 Mbps. In other words, the available AMBR of the first terminal device cannot support the first session. In this case, the access network device requests the session management network element of the first terminal device to modify the AMBR of the first session. For example, the AMBR of the first session is modified to 2 Mbps.

In specific implementation, the access network device may further send third information to the session management network element of the first terminal device by using the access and mobility management network element of the first terminal device. The third information indicates the available AMBR of the first terminal device, so that the session management network element of the first terminal device modifies the AMBR of the first session based on the available AMBR of the first terminal device. For example, a modified AMBR of the first session is less than or equal to the available AMBR of the first terminal device.

In a second manner, in the layer 2 relay scenario, the access network device indicates the session management network element of the second terminal device to modify the AMBR of the first session.

For example, if the access network device determines that the AMBR of the first session is greater than an available AMBR of the first terminal device, the access network device sends second information to the session management network element of the second terminal device by using the access and mobility management network element of the second terminal device. The available AMBR is a difference between the UE granularity-based AMBR and an AMBR that has been occupied by the session, and the second information requests the session management network element of the second terminal device to modify the AMBR of the first session.

In specific implementation, the access network device may further send fourth information to the session management network element of the second terminal device by using the access and mobility management network element of the second terminal device. The fourth information indicates the available AMBR of the first terminal device, so that the session management network element of the second terminal device modifies the AMBR of the first session based on the available AMBR of the first terminal device. For example, a modified AMBR of the first session is less than or equal to the available AMBR of the first terminal device.

For example, the relay UE-AMBR is 10 Mbps, a relay session-AMBR allocated by the UDM for the first session is 3 Mbps, and an AMBR occupied by all current sessions of the first terminal device except the first session is 8 Mbps. (10 Mbps-8 Mbps) < 3 Mbps. In other words, the available AMBR of the first terminal device cannot support the first session. In this case, the access network device requests the session management network element of the first terminal device to modify the AMBR of the first session. For example, the AMBR of the first session is modified to 2 Mbps.

In another possible implementation, the access network device modifies the AMBR of the first session. The access network device may further send a modified AMBR to the session management network element. The session management network element receives the modified AMBR sent by the access network device, and may send response information to the access network device. The response information may indicate that the session management network element accepts the currently modified AMBR from the first access network device. The session management network element in the layer 2 relay scenario is the session management network element of the second terminal device, and the session management network element in the layer 3 relay scenario is the session management network element of the first terminal device.

905: The access network device performs bandwidth control on the first session based on the modified AMBR.

In specific implementation, the access network device receives the modified AMBR of the first session from the session management network element of the first terminal device or the session management network element of the second terminal device.

The access network device may further perform bandwidth control on the first session based on the modified AMBR.

Optionally, the method shown in FIG. 9 further includes: The access network device sends the available AMBR to the first terminal device.

The available AMBR sent by the access network device may be a latest available AMBR of the first terminal device, namely, a remaining AMBR of a UE-AMBR (the UE granularity-based AMBR used when the relay service is provided) after the first terminal device accesses the first session. The AMBR of the first session may be a modified AMBR, or may be an initially allocated AMBR.

For example, the relay UE-AMBR (namely, the UE granularity-based AMBR used when the first terminal device provides the relay service) of the first terminal device is 10 Mbps, and a remaining available UE-AMBR before the first terminal device accesses the first session is 3 Mbps. Assuming that the session-AMBR of the first session is 2 Mbps, a remaining available UE-AMBR after the first terminal device accesses the first session is 1 Mbps. The access network device sends a message to the first terminal device to indicate that the remaining AMBR of the UE-AMBR used when the first terminal device provides the terminal service is 1 Mbps.

Assuming that the session-AMBR of the first session is 4 Mbps and exceeds the current remaining available UE-AMBR (3 Mbps), the session-AMBR of the first session may be modified. For example, the session-AMBR of the first session is modified to 1 Mbps. In this case, the remaining available UE-AMBR after the first terminal device accesses the first session is 2 Mbps. The access network device sends a message to the first terminal device to indicate that the remaining AMBR of the UE-AMBR used when the first terminal device provides the terminal service is 2 Mbps.

After receiving the remaining available AMBR, the first terminal device may notify, in a process of relay discovery with another terminal device, the another terminal device of a current maximum bandwidth that can be supported by the first terminal device.

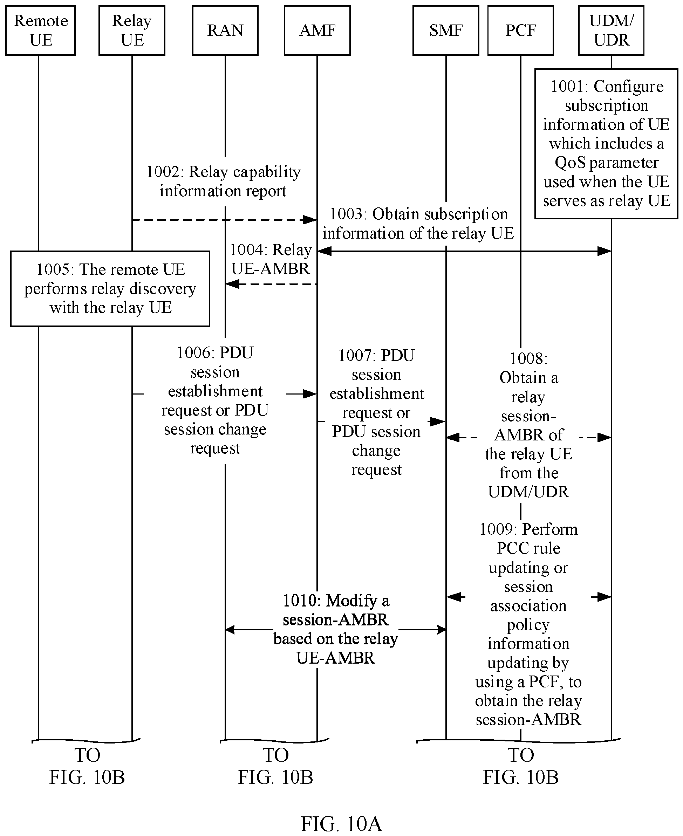

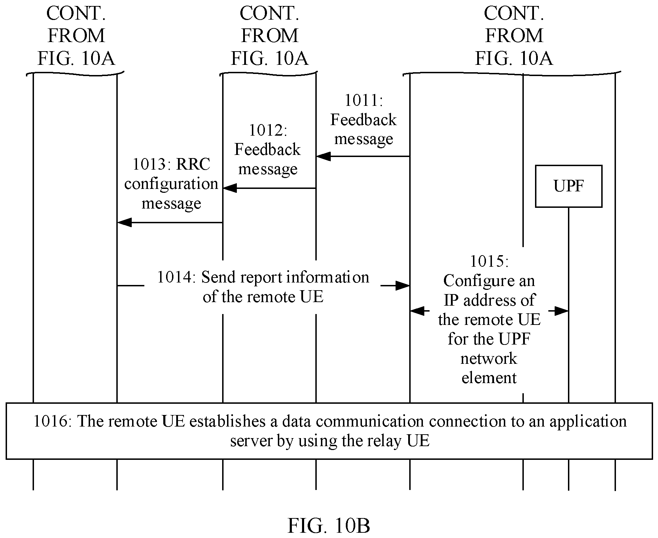

Refer to FIG. 10A and FIG. 10B. An embodiment of this application further provides a relay communication method. Different from the method shown in FIG. 9, the relay communication method provided in FIG. 10A and FIG. 10B is applicable to only a layer 3 relay scenario. An example in which a first terminal device is relay UE and a second terminal device is remote UE is used. The remote UE may access a network by using the relay UE, and establish a non-direct connection to the network. The relay UE may establish or update a PDU session to provide a relay service for the remote UE. An RAN may modify an AMBR of the session based on a role of the UE. As shown in FIG. 10A and FIG. 10B, the method includes the following steps.

1001: A UDM/UDR configures subscription information of the UE.

The subscription information of the UE includes a QoS parameter used when the UE serves as common UE and a QoS parameter used when the UE serves as relay UE, for example, a UE-AMBR and/or a session-AMBR used when the UE serves as common UE and a relay UE-AMBR and/or a relay session-AMBR used when the UE serves as relay UE. It should be noted that, that the UE serves as common UE may be understood as that the UE does not provide a relay service.

The subscription information of the UE may be configured and stored by the UDM, or the UDM may store the subscription information of the UE in a unified data repository (unified data repository, UDR) network element. When another network element requests the subscription information of the UE from the UMD, the UDM directly sends the subscription information to the network element, or the UDM obtains the subscription information of the UE from the UDR and then sends the subscription information of the UE to the network element. When subscription information of the UE changes, the UDM may also notify changed subscription information of the UE to a network element that has subscribed to the subscription information of the UE. In a possible implementation, the UDM and the UDR may be deployed together.

1002: The relay UE reports relay capability information to an AMF.

It should be noted that, step 1002 is an optional step, and the AMF is an AMF of the relay UE, and provides a service for the relay UE. The relay UE may send the relay capability information to the AMF when registering with a network or requesting a network service or when cell handover is performed. The relay capability information indicates that the relay UE supports a relay service and has a capability of providing the relay service.

For example, the relay UE sends a registration request to the AMF. The registration request includes the relay capability information of the relay UE.

1003: The AMF obtains subscription information of the relay UE from the UDMIUDR.

The subscription information of the relay UE includes a relay UE-AMBR. The relay UE-AMBR is a UE granularity-based AMBR used when the relay UE provides a relay service or when the relay UE serves as a relay device. Optionally, the subscription information obtained by the AMF from the UDM/UDR further includes a relay session-AMBR, namely, a session granularity AMBR used when the UE serves as a relay device (or provides a relay service).

1004: The AMF sends the relay UE-AMBR in the subscription information of the relay UE to the RAN.

Specifically, the AMF may use the relay UE-AMBR as a part of a context of the relay UE; and when the relay UE performs a service request procedure, a registration procedure, or a base station switching procedure, the AMF may send the relay UE-AMBR together with an N2 message to a base station (for example, the RAN) serving the relay UE.

1005: The remote UE performs relay discovery with the relay UE.

For example, when the remote UE establishes a connection to the RAN, and communication quality at a Uu interface between the remote UE and the RAN cannot satisfy a communication requirement, or the remote UE is outside network coverage or is in a connection management-idle (connection management-idle, CM-IDLE) state, the remote UE may initiate a relay connection to the relay UE based on relay discovery information preconfigured on a network side or relay discovery information preconfigured locally, to complete relay discovery. The relay discovery information is for establishing the relay connection (for example, a direct connection between the remote UE and the relay UE, which may be a PC5 connection), and includes authorization information for relay connection to a network, policy information for discovering a relay node, spectrum information for relay communication, and the like. The remote UE may obtain an identifier of the relay UE in a relay discovery procedure.

Optionally, signaling exchanged between the remote UE and the relay UE in the relay discovery process may include service information of a relay service that needs to be performed or a QoS requirement. Details are as follows.
(1) The service information of the relay service may be a specific service that requires the relay UE to access a cellular network for the remote UE, for example, a VR video forwarding service, an Internet access service, a service ID, or an application ID. The service information of the relay service may alternatively be a relay service code (relay service code, RSC) preconfigured on the network side, or may be DNN information.
(2) The QoS requirement may be a QoS parameter corresponding to a QoS requirement of a service that the remote UE needs to request, for example, a PC5 QoS parameter and/or a Uu QoS parameter. The PC5 QoS parameter represents a quality of service requirement of a PC5 interface, and the Uu QoS parameter represents a quality of service requirement of a Uu interface.

1006: The relay UE initiates a PDU session establishment request or a PDU session change request.

In a layer 3 relay communication scenario, the remote UE needs to use a PDU session of the relay UE. Therefore, the relay UE establishes or changes a PDU session herein. A session that the relay UE requests to establish or update may be referred to as a first session below.

Optionally, the PDU session establishment request or the PDU session change request carries a relay service indication. The relay service indication represents that the relay UE is to provide the relay service for the remote UE. It may be determined, based on the relay service indication, that a role of the relay UE is a relay device. The relay service indication may be a piece of explicit indication information or a combination of a specific DNN and/or specific slice information (the combination is for providing a relay connection service).

The PDU session establishment request or the PDU session change request may further include:
(1) relay service code, used to indicate a UE-to-network relay service. The relay service code may further indicate specific service content of the relay service, for example, a service ID, an application ID, a DNN, or slice information of the relay service; and
(2) the PC5 QoS parameter, where the PC5 QoS parameter may be a QoS parameter obtained in the relay discovery process between the remote UE and the relay UE.

1007: The AMF forwards the PDU session establishment request or the PDU session change request to an SMF.

1008: The SMF obtains the subscription information of the relay UE from the UDM/UDR, where the subscription information includes the relay session-AMBR of the relay UE.

The relay session-AMBR is a session granularity AMBR used when the relay UE provides the relay service. The SMF may use the relay session-AMBR as an AMBR of the first session.

It should be noted that, step 1008 is an optional step. Alternatively, the SMF may obtain the relay session-AMBR according to step 1009 and step 1010.

1009: The SMF performs PCC rule updating or session association policy information updating by using a PCF, to obtain the relay session-AMBR.

In specific implementation, the SMF indicates the PCF to perform PCC rule updating or session association policy information updating, and the PCF obtains user equipment or session-related subscription information from the UDM/UDR in response to the indication of the SMF, to generate or update a PCC rule or session association policy information. The PCF may further send the generated or updated PCC rule or session association policy information to the SMF. The PCC rule or session association policy information includes the relay session-AMBR. The SMF may use the relay session-AMBR in the PCC rule or session association policy information as the AMBR of the first session.

It may be understood that, the SMF either performs step 1008 to directly obtain the relay session-AMBR from the UDM/UDR, or performs step 1009 to obtain the relay session-AMBR by using the PCF. If the SMF performs step 1008 and then performs step 1009 to obtain the relay session-AMBR from the PCF, the SMF uses the relay session-AMBR obtained from the PCF as an AMBR value of a current session.

1010: Modify the session-AMBR based on the relay UE-AMBR.

Specifically, the RAN determines whether a currently available UE-AMBR satisfies a relay service requirement of the relay UE.

Optionally, the SMF sends third information to the RAN. The third information indicates that the first session is for transmitting data of the second terminal device, that is, indicate that the first session is used for the relay service.

For example, the third information may be added to an N2 message sent by the SMF to the RAN, to indicate that the PDU session is used for the relay service. After receiving the N2 message, the RAN may determine, based on the third information, that an AMBR of the PDU session is included in the relay UE-AMBR. In other words, the session-AMBR of the PDU session may be modified based on the relay UE-AMBR. When a remaining AMBR of the relay UE-AMBR is less than the session-AMBR of the PDU session, the session-AMBR of the PDU session is modified.

For example, the RAN determines a currently available UE-AMBR of the first terminal device based on the relay UE-AMBR and a sum of session-AMBRs of current sessions of the first terminal device. In a layer 3 relay scenario, a current session may be a session used by the relay UE to provide a relay service, or may be a session for another service of the relay UE. The session used by the relay UE to provide a relay service includes a session used by the relay UE to provide a relay service for the current remote UE and a session used by the relay UE to provide a relay service for another remote device. The session used by the relay UE to provide a relay service for the current remote UE is a PDU session established by the relay UE.

If the session-AMBR of the first session does not exceed the currently available UE-AMBR of the first terminal device, it is determined that the relay service requirement of the relay UE is satisfied, and the session-AMBR of the first session is not modified; or if the session-AMBR of the first session exceeds the currently available UE-AMBR of the first terminal device, it is determined that the relay service requirement of the relay UE is not satisfied, and the session-AMBR of the first session needs to be modified. The RAN may modify the session-AMBR of the first session, or may indicate the SMF of the relay UE to modify the session-AMBR of the first session. Optionally, the RAN may further send the currently available UE-AMBR of the relay UE (a remaining available AMBR of the UE-AMBR used when the UE serves as a relay device) to the SMF of the relay UE, so that the SMF of the relay UE modifies the session-AMBR of the first session based on the currently available UE-AMBR of the relay UE.

For example, the relay UE-AMBR is 10 Mbps, the sum of the session-AMBRs of the current sessions of the first terminal device is 7 Mbps, and the currently available UE-AMBR of the first terminal device is 3 (that is, 10-7) Mbps. Assuming that the session-AMBR of the first session obtained in step 1008 or 1009 is 4 Mbps and is greater than the currently available UE-AMBR of the first terminal device, the SMF of the relay UE is indicated to modify the session-AMBR of the first session.

10 11: The SMF sends a feedback message to the AMF after completing establishment or updating of a PDU session.

The feedback message indicates that the PDU session of the relay UE has been established or changed. Optionally, if the RAN indicates the SMF of the relay UE to modify the session-AMBR of the first session, the feedback message may include a session-AMBR modified by the SMF.

Alternatively, if the RAN modifies the session-AMBR of the first session, the feedback message may include response information, indicating that the SMF supports (or agrees on or accepts) a session-AMBR modified by the RAN.

1012: After receiving the feedback message from the SMF, the AMF forwards the feedback message to the RAN.

1013: The RAN allocates a radio resource to the relay UE by using a radio resource control (radio resource control, RRC) configuration message.

In addition, the RRC configuration message may further include the currently available UE-AMBR of the relay UE.

Optionally, the RRC configuration message may further include configuration of an IP address for the remote UE, a QoS parameter used for PC5 communication, and the like.

1014: The relay UE sends report information of the remote UE to the SMF.

Specifically, the report information of the remote UE including a user identifier of the remote UE (remote UE ID) and an allocated IP address is sent to the SMF. In a possible implementation, the relay UE may send the report information of the remote UE to the SMF network element by using a user plane UPF, or send the report information of the remote UE to the SMF by using the AMF network element.

1015: After receiving the report information of the remote UE, the SMF configures the IP address of the remote UE for the UPF network element.

In addition, the SMF sends a modified session-AMBR of the first session to the UPF by using an N4 configuration message.

1016: The remote UE establishes a data communication connection to an application server by using the relay UE.

The method shown in FIG. 10A and FIG. 10B implements a layer 3 relay function. When the relay UE needs to implement the relay service, the network side modifies the AMBR of the PDU session of the relay UE based on the relay UE-AMBR.

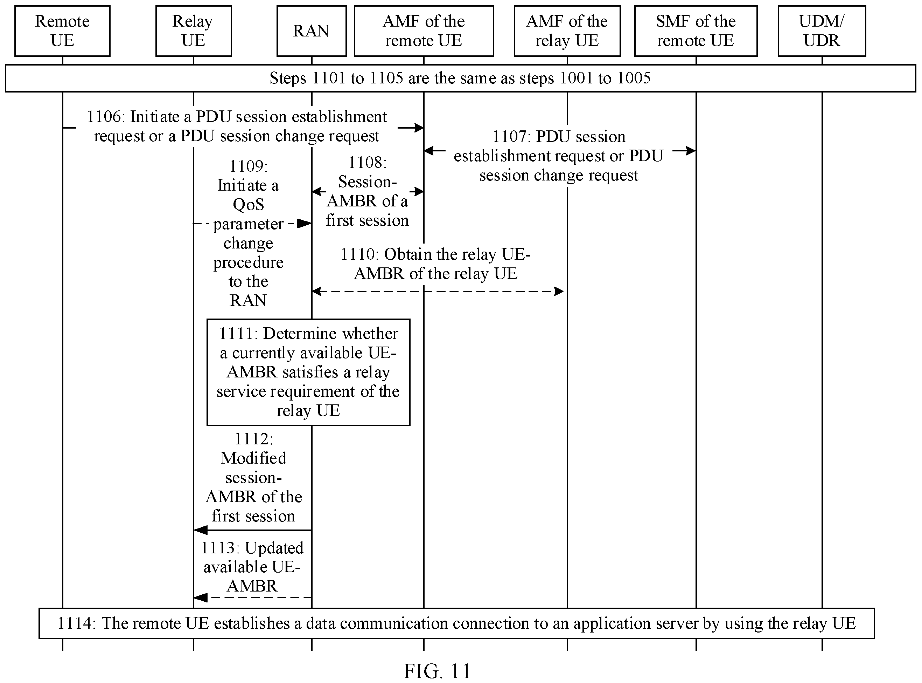

Refer to FIG. 11. An embodiment of this application further provides a relay communication method. Different from the methods shown in FIG. 9 and FIG. 10A and FIG. 10B, the method shown in FIG. 11 is applicable to only a layer 2 relay scenario. An example in which a first terminal device is relay UE and a second terminal device is remote UE is used. The remote UE may access a network by using the relay UE, and establish a non-direct connection to the network. The remote UE may establish or update a PDU session, and the relay UE provides a relay service for the remote UE by using the PDU session. An RAN may modify an AMBR of the session based on a role of the UE. As shown in FIG. 11, the method includes the following steps.

Step 1101 to step 1105 are the same as step 1001 to step 1005 in the embodiment shown in FIG. 10A and FIG. 10B, and details are not described herein again.

1106: The remote UE initiates a PDU session establishment request or a PDU session change request.

Specifically, after the remote UE establishes a PC5 connection to the relay UE, the remote UE sends the PDU session establishment request or the PDU session change request to an AMF of the remote UE by using the relay UE and the RAN.

In addition, the remote UE may further send a relay service request to the AMF of the remote UE by using a non-access stratum (non-access stratum, NAS) message, to request to establish a connection to the network through relay.

In a possible implementation, the RAN may obtain a binding relationship between the remote UE and the relay UE. Specifically, the remote UE sends an RRC message to the RAN through relay. After receiving the RRC message forwarded by the relay UE, the RAN forwards a NAS message in the RRC message to the AMF of the remote UE. In addition, the RAN may obtain an identifier of the relay UE from the RRC message, to obtain the binding relationship between the relay UE and the remote UE.

1107: The AMF of the remote UE sends the PDU session establishment request or the PDU session change request to an SMF of the remote UE, and the SMF establishes or changes a PDU session for the remote UE based on the request.

It should be noted that, the PDU session established or changed by the SMF for the remote UE based on the request is referred to as a first session for short below. The SMF of the remote UE may further obtain a session-AMBR of the remote UE from the UDM/UDR, and use the session-AMBR of the remote UE as a session-AMBR of the first session.

The SMF of the remote UE may further send the session-AMBR of the first session to the AMF of the remote UE.

1108: The AMF of the remote UE sends the session-AMBR of the first session to the RAN.

1109: Optionally, the relay UE may initiate a QoS parameter change procedure to the RAN based on PC5 service information or a QoS parameter obtained in a relay discovery process, to obtain a relay UE-AMBR of the relay UE.

The relay UE initiates a QoS parameter change procedure by using a QoS parameter change request message. The QoS parameter change request message may carry a relay service indication, and the relay service indication represents that the relay UE is to provide a relay service. The RAN may obtain, from an AMF of the relay UE based on the relay service indication, subscription information of the UE serving as a relay device. The subscription information includes a UE-AMBR used when the UE serves as a relay device, namely, the relay UE-AMBR in this embodiment of this application. In addition, the QoS parameter change request message may further carry relay service information or a PC5 QoS requirement.

1110: The RAN obtains the relay UE-AMBR of the relay UE from the AMF of the relay UE.

In specific implementation, the RAN first determines whether local configuration information includes the UE-AMBR used by the relay UE for the relay service. If no relay UE-AMBR is stored locally, the RAN requests the relay UE-AMBR from the AMF of the relay UE.

It should be noted that, if the RAN does not perform step 1104 to obtain the relay UE-AMBR of the relay UE, the RAN performs step 1109 and step 1110 to obtain the relay UE-AMBR of the relay UE.

1111: The RAN determines whether a currently available UE-AMBR of the relay UE satisfies a relay service requirement of the remote UE.

Specifically, the RAN determines the currently available UE-AMBR of the first terminal device based on the relay UE-AMBR and a sum of session-AMBRs of current sessions of the first terminal device. In a layer 2 relay scenario, a current session may be a session used by the relay UE to provide a relay service. The session used by the relay UE to provide a relay service includes a session used by the relay UE to provide a relay service for the current remote UE and a session used by the relay UE to provide a relay service for another remote device. The session used by the relay UE to provide a relay service for the current remote UE is a PDU session established by the remote UE.

If the session-AMBR of the first session does not exceed the currently available UE-AMBR of the first terminal device, it is determined that the relay service requirement of the remote UE is satisfied, and the session-AMBR of the first session is not modified; or if the session-AMBR of the first session exceeds the currently available UE-AMBR of the first terminal device, it is determined that the relay service requirement of the remote UE is not satisfied, and the session-AMBR of the first session needs to be modified.

For example, the relay UE-AMBR is 10 M, the sum of the session-AMBRs of the current sessions of the first terminal device is 7 Mbps, and the currently available UE-AMBR of the first terminal device is 3 (that is, 10-7) Mbps. Assuming that the session-AMBR of the first session obtained in step 1008 or 1009 is 4 Mbps and is greater than the currently available UE-AMBR of the first terminal device, the SMF of the remote UE is indicated to modify the session-AMBR of the first session. The RAN may further receive a modified session-AMBR from the SMF of the remote UE.

In a possible implementation, if the session-AMBR of the first session exceeds the currently available UE-AMBR of the first terminal device, the RAN sends radio resource feedback information to the SMF of the remote UE by using the AMF of the remote UE. The radio resource feedback information indicates a PDU session or a QoS flow that is not supported by the RAN and a cause (Cause) why the PDU session or the QoS flow is not supported. Optionally, the radio resource feedback information may further include a session-AMBR currently supported by the relay UE. The SMF of the remote UE may modify the session-AMBR of the first session based on the session-AMBR currently supported by the relay UE.

The radio resource feedback information may include a PDU session ID or a QFI (QoS Flow Identifier identifier) that identifies an unsupported PDU session or specific QoS flow.

1112: The RAN sends the modified session-AMBR of the first session to the relay UE.

1113: The RAN sends an updated available UE-AMBR to the relay UE.

Step 1113 is an optional step. Specifically, after the SMF of the relay UE modifies the session-AMBR of the first session, the RAN may further update the currently available UE-AMBR of the first terminal device. For example, the relay UE-AMBR is 10 Mbps, the sum of the session-AMBRs of the current sessions of the first terminal device is 7 Mbps, and the currently available UE-AMBR of the first terminal device is 3 (that is, 10-7) Mbps. A session-AMBR modified by the SMF is 2 Mbps. In this case, the currently available UE-AMBR of the first terminal device is updated to 1 Mbps (that is, 3-2).

The RAN may further notify the relay UE of the currently available UE-AMBR by using an RRC configuration message. When another remote UE needs to establish a UE-to-network relay service with the relay UE, the remote UE may send bandwidth requirement information of the relay service to the relay UE in PC5 signaling exchange. The relay UE may determine, based on the currently available UE-AMBR, whether the relay service requirement of the remote UE may be satisfied.

1114: The remote UE establishes a data communication connection to an application server by using the relay UE.

The method shown in FIG. 11 implements a layer 2 relay function. When the relay UE needs to implement the relay service, a network side modifies the AMBR of the PDU session of the remote UE based on the relay UE-AMBR.

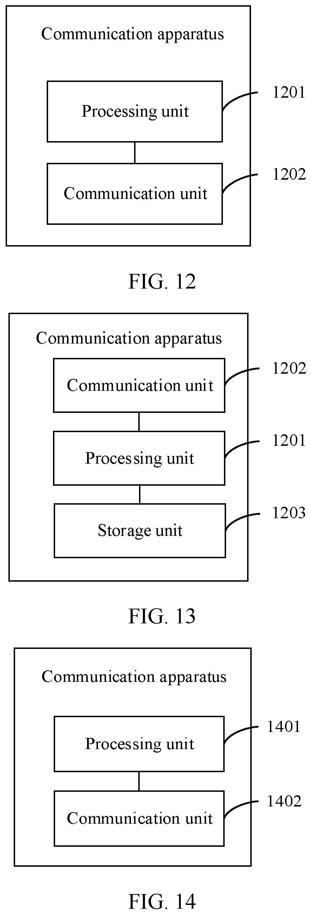

When functional modules are obtained through division in correspondence to functions, FIG. 12 is a schematic diagram of a possible structure of a communication apparatus in the foregoing embodiments. The communication apparatus shown in FIG. 12 may be the network access device in the embodiments of this application, may be a component that is in the access network device and that implements the foregoing methods, or may be a chip applied to the access network device. The chip may be a system on chip (System-On-a-Chip, SOC), a baseband chip with a communication function, or the like. As shown in FIG. 12, the communication apparatus includes a processing unit 1201 and a communication unit 1202. The processing unit may be one or more processors, and the communication unit may be a transceiver or a communication interface.

The processing unit 1201 may be configured to support the communication apparatus in performing a processing action in the foregoing method embodiments. Specifically, the processing unit 1201 may perform processing actions performed by the access network device in FIG. 9 to FIG. 11. For example, the processing unit 1201 may be configured to support the access network device in performing step 901, step 904, and step 905, or step 1010 and step 1111, and/or used for other processes of the technology described in this specification.

The communication unit 1202 is configured to support communication between the access network device and another communication apparatus, and may specifically perform sending and/or receiving actions performed by the access network device in FIG. 9 to FIG. 11. For example, the communication unit 1202 supports the access network device in performing one or more of step 903, step 1004, and step 1012, and/or is used for other processes of the technology described in this specification.

It should be noted that all related content of the steps in the foregoing method embodiments may be cited in function descriptions of corresponding functional modules. Details are not described herein again.

As shown in FIG. 13, the communication apparatus may further include a storage unit 1203. The storage unit 1203 is configured to store program code and/or data of the communication apparatus.

The processing unit 1201 may include at least one processor, the communication unit 1202 may be a transceiver or a communication interface, and the storage unit 1203 may include a memory.

When functional modules are obtained through division in correspondence to functions, FIG. 14 is a schematic diagram of a possible structure of a communication apparatus in the foregoing embodiments. The communication apparatus shown in FIG. 14 may be the access and mobility management network element in the embodiments of this application, may be a component that is in the access and mobility management network element and that implements the foregoing methods, or may be a chip applied to the access and mobility management network element. The chip may be a system on chip (System-On-a-Chip, SOC), a baseband chip with a communication function, or the like. As shown in FIG. 14, the communication apparatus includes a processing unit 1401 and a communication unit 1402. The processing unit 1401 may be one or more processors, and the communication unit 1402 may be a transceiver or a communication interface.

The processing unit 1401 may be configured to support the communication apparatus in performing a processing action in the foregoing method embodiments. Specifically, the processing unit 1401 may perform processing actions performed by the access and mobility management network element in FIG. 9 to FIG. 11. For example, the processing unit 1401 is configured to support the access and mobility management network element in obtaining subscription information of UE serving as a relay device, including a UE-AMBR used when the UE serves as a relay device, and/or is used for other processes of the technology described in this specification.

The communication unit 1402 is configured to support communication between the access and mobility management network element and another communication apparatus, and may specifically perform sending and/or receiving actions performed by the access and mobility management network element in FIG. 9 to FIG. 11. For example, the communication unit 1402 supports the access and mobility management network element in performing step 1007 and step 1010, and/or is used for other processes of the technology described in this specification.

It should be noted that all related content of the steps in the foregoing method embodiments may be cited in function descriptions of corresponding functional modules. Details are not described herein again.

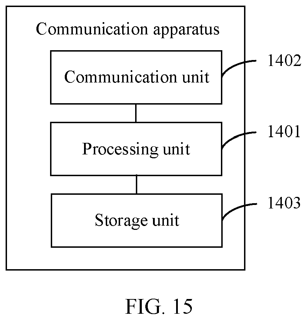

As shown in FIG. 15, the communication apparatus may further include a storage unit 1403. The storage unit 1403 is configured to store program code and data of the communication apparatus.

The processing unit 1401 may include at least one processor, the communication unit 1402 may be a transceiver or a communication interface, and the storage unit 1403 may include at least one memory.

It should be noted that, in the foregoing communication apparatus embodiments, each unit may also be correspondingly referred to as a module, a component, a circuit, or the like.

An embodiment of this application provides a computer-readable storage medium. The computer-readable storage medium stores instructions. The instructions are used to perform the method shown in FIG. 9, FIG. 10A and FIG. 10B, or FIG. 11.

An embodiment of this application provides a computer program product including instructions. When the computer program product runs on a communication apparatus, the communication apparatus is enabled to perform the method shown in FIG. 9, FIG. 10A and FIG. 10B, or FIG. 11.

An embodiment of this application provides a wireless communication apparatus. The wireless communication apparatus stores instructions. When the wireless communication apparatus runs on the communication apparatus shown in FIG. 8a, FIG. 8b, and FIG. 12 to FIG. 15, the communication apparatus is enabled to perform the method shown in FIG. 9, FIG. 10A and FIG. 10B, or FIG. 11. The wireless communication apparatus may be a chip.

Based on the descriptions of the foregoing implementations, a person skilled in the art can clearly understand that, for ease and brevity of description, division into the foregoing functional modules is merely used as an example for illustration. In actual application, the foregoing functions may be allocated to different functional modules and implemented as required. In other words, an inner structure of a communication apparatus is divided into different functional modules to implement all or some of the functions described above.

A processor in this embodiment of this application may include but is not limited to at least one of the following: various computing devices that run software, for example, a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions for computing or processing. The processor may be a single semiconductor chip, or may be integrated with another circuit to form a semiconductor chip. For example, the processor may form an SoC (system on chip) with another circuit (for example, an encoding/decoding circuit, a hardware acceleration circuit, or various buses and interface circuits), or may be integrated into an ASIC as a built-in processor in the ASIC. The ASIC into which the processor is integrated may be packaged separately or may be packaged together with another circuit. In addition to the cores for executing the software instructions for computing or processing, the processor may further include a necessary hardware accelerator, for example, a field programmable gate array (field programmable gate array, FPGA), a PLD (programmable logic device), or a logic circuit that implements a specialized logic operation.

A memory in this embodiment of this application may include at least one of the following types: a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM). In some scenarios, the memory may alternatively be but is not limited to a compact disc read-only memory (compact disc read-only memory, CD-ROM) or another optical disk storage, an optical disc storage (including a compact disc, a laser disc, an optical disc, a digital versatile disc, a blue-ray optical disc, and the like), a magnetic disk storage medium or another magnetic storage device, or any other computer-accessible medium that can be used to carry or store expected program code in an instruction or data structure form.

In this application, "at least one" means one or more. "A plurality of" means two or more than two. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one item (piece) of the following" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and that the terms such as "first" and "second" do not indicate a definite difference.

In the several embodiments provided in this application, it should be understood that the disclosed database access apparatus and method may be implemented in other manners. For example, the described database access apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the database access apparatuses or units may be implemented in electrical, mechanical, or other forms.

The units described as separate parts may or may not be physically separate, and parts displayed as units may be one or more physical units, and may be located in one place or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A relay communication method, comprising:
obtaining, by an access network device, an aggregate maximum bit rate AMBR of a first session and a user equipment UE granularity-based AMBR used when a first terminal device provides a relay service, wherein the first session is for transmitting data of a second terminal device, and the first terminal device is a relay device of the second terminal device; and
modifying, by the access network device, the AMBR of the first session based on the UE granularity-based AMBR.

2. The method according to claim 1, wherein the obtaining, by an access network device, an AMBR of a first session comprises:
if the first session is a session of the first terminal device, receiving, by the access network device by using an access and mobility management network element of the first terminal device, the AMBR of the first session sent by a session management network element of the first terminal device; or
if the first session is a session of the second terminal device, receiving, by the access network device by using an access and mobility management network element of the second terminal device, the AMBR of the first session sent by a session management network element of the second terminal device.

3. The method according to claim 1 or 2, wherein the obtaining, by an access network device, a user equipment UE granularity-based AMBR used when a first terminal device provides a relay service comprises:
receiving the UE granularity-based AMBR sent by the access and mobility management network element of the first terminal device.

4. The method according to any one of claims 1 to 3, wherein the modifying, by the access network device, the AMBR of the first session based on the UE granularity-based AMBR comprises:
if the AMBR of the first session is greater than an available AMBR of the first terminal device, sending, by the access network device, first information to the session management network element of the first terminal device by using the access and mobility management network element of the first terminal device, wherein the available AMBR is a difference between the UE granularity-based AMBR and an AMBR that has been occupied by the session, and the first information requests the session management network element of the first terminal device to modify the AMBR of the first session; and
receiving a modified AMBR of the first session from the session management network element of the first terminal device.

5. The method according to any one of claims 1 to 3, wherein the modifying, by the access network device, the AMBR of the first session based on the UE granularity-based AMBR comprises:
if the AMBR of the first session is greater than an available AMBR of the first terminal device, sending, by the access network device, second information to the session management network element of the second terminal device by using the access and mobility management network element of the second terminal device, wherein the available AMBR is a difference between the UE granularity-based AMBR and an AMBR that has been occupied by the session, and the second information requests the session management network element of the second terminal device to modify the AMBR of the first session; and
receiving a modified AMBR of the first session from the session management network element of the second terminal device.

6. The method according to claim 4 or 5, wherein the method further comprises:
performing, by the access network device, bandwidth control on the first session based on the modified AMBR of the first session.

7. The method according to claim 6, wherein the method further comprises:
updating, by the access network device, an available AMBR of the first terminal device based on the modified AMBR of the first session.

8. The method according to any one of claims 1 to 7, wherein the method further comprises:
sending an available AMBR of the first terminal device to the first terminal device.

9. The method according to any one of claims 1 to 8, wherein the method further comprises:
receiving third information from the session management network element, wherein the third information indicates that the first session is for transmitting data of the second terminal device.

10. A relay communication method, comprising:
obtaining, by an access and mobility management network element, a user equipment UE granularity-based aggregate maximum bit rate AMBR used when a first terminal device provides a relay service; and
sending, by the access and mobility management network element to an access network device of the first terminal device, the UE granularity-based AMBR used when the first terminal device provides the relay service.

11. The method according to claim 10, wherein the method further comprises:
receiving, by the access and mobility management network element, relay capability information from the first terminal device, wherein the relay capability information represents that the first terminal device supports a relay service.

12. The method according to claim 10 or 11, wherein the obtaining, by an access and mobility management network element, a UE granularity-based AMBR used when a first terminal device provides a relay service comprises:
obtaining, by the access and mobility management network element, subscription information of the first terminal device from a subscriber data management network element or a unified data storage network element, wherein the subscription information of the first terminal device comprises the UE granularity-based AMBR used when the first terminal device provides the relay service.

13. A communication apparatus, comprising:
a processing unit, configured to obtain an aggregate maximum bit rate AMBR of a first session and a user equipment UE granularity-based AMBR used when a first terminal device provides a relay service, wherein the first session is for transmitting data of a second terminal device, and the first terminal device is a relay device of the second terminal device; and
the processing unit is further configured to modify the AMBR of the first session based on the UE granularity-based AMBR.

14. The apparatus according to claim 13, wherein
if the first session is a session of the first terminal device, the processing unit receives, by using an access and mobility management network element of the first terminal device, the AMBR of the first session sent by a session management network element of the first terminal device; or
if the first session is a session of the second terminal device, the processing unit receives, by using an access and mobility management network element of the second terminal device, the AMBR of the first session sent by a session management network element of the second terminal device.

15. The apparatus according to claim 13 or 14, wherein the communication apparatus further comprises a communication unit, wherein
the communication unit is configured to receive the UE granularity-based AMBR sent by the access and mobility management network element of the first terminal device.

16. The apparatus according to any one of claims 13 to 15, wherein the communication apparatus comprises a communication unit, wherein
the communication unit is configured to: if the processing unit determines that the AMBR of the first session is greater than an available AMBR of the first terminal device, send first information to the session management network element of the first terminal device by using the access and mobility management network element of the first terminal device, wherein the available AMBR is a difference between the UE granularity-based AMBR and an AMBR that has been occupied by the session, and the first information requests the session management network element of the first terminal device to modify the AMBR of the first session; and
receive a modified AMBR of the first session from the session management network element of the first terminal device.

17. The apparatus according to any one of claims 13 to 15, wherein the communication apparatus comprises a communication unit, wherein
if the processing unit determines that the AMBR of the first session is greater than an available AMBR of the first terminal device, send second information to the session management network element of the second terminal device by using the access and mobility management network element of the second terminal device, wherein the available AMBR is a difference between the UE granularity-based AMBR and an AMBR that has been occupied by the session, and the second information requests the session management network element of the second terminal device to modify the AMBR of the first session; and
receive a modified AMBR of the first session from the session management network element of the second terminal device.

18. The communication apparatus according to claim 16 or 17, wherein the processing unit is further configured to perform bandwidth control on the first session based on the modified AMBR of the first session.

19. The communication apparatus according to claim 18, wherein
the processing unit is configured to update an available AMBR of the first terminal device based on the modified AMBR of the first session; and
the communication unit is configured to send an updated available AMBR of the first terminal device to the first terminal device.

20. A communication apparatus, comprising:
a processing unit, configured to obtain a user equipment UE granularity-based aggregate maximum bit rate AMBR used when a first terminal device provides a relay service; and
a communication unit, configured to: send, to an access network device of the first terminal device, the UE granularity-based AMBR used when the first terminal device provides the relay service.

21. The communication apparatus according to claim 20, wherein the communication unit is further configured to receive relay capability information from the first terminal device, wherein the relay capability information represents that the first terminal device supports a relay service.

22. The communication apparatus according to claim 20 or 21, wherein
the processing unit is specifically configured to obtain subscription information of the first terminal device from a subscriber data network element or a unified data storage network element, wherein the subscription information of the first terminal device comprises the UE granularity-based AMBR used when the first terminal device provides the relay service.

23. A communication apparatus, comprising a processor, wherein the processor is coupled to a memory;
the memory is configured to store a computer program; and
the processor is configured to execute the computer program stored in the memory, so that the apparatus performs the method according to any one of claims 1 to 9, or performs the method according to any one of claims 10 to 12.

24. A computer-readable storage medium, wherein the storage medium stores a computer program or instructions, and when the computer program or the instructions are run by a processor, the method according to any one of claims 1 to 9 is performed, or the method according to any one of claims 10 to 12 is performed.

25. A computer program product, wherein the computer program product comprises computer instructions, and when the computer instructions are run, the method according to any one of claims 1 to 9 is performed, or the method according to any one of claims 10 to 12 is performed.

26. A chip, wherein the chip comprises a processor and an interface circuit, the interface circuit is coupled to the processor, and the processor is configured to run a computer program or computer instructions, so that the method according to any one of claims 1 to 9 is performed, or the method according to any one of claims 10 to 12 is performed.

27. A processor, configured to perform the method according to any one of claims 1 to 9, or perform the method according to any one of claims 10 to 12.

28. An information transmission apparatus, configured to perform the method according to any one of claims 1 to 9.

29. An information transmission apparatus, configured to perform the method according to any one of claims 10 to 12.

30. A communication system, comprising the communication apparatus according to any one of claims 13 to 19 and/or the communication apparatus according to any one of claims 20 to 22.
